# EUROPÄISCHE PATENTANMELDUNG

(11) **EP 4 815 222 A1**
(43) Veröffentlichungstag der Anmeldung: **30.09.2026**
(21) Anmeldenummer: 26166384.3
(22) Anmeldetag: 20.03.2026
(51) Int. Cl.: H01T 4/04, H01T 4/06, H02H 9/06

(54) **BAUGRUPPE FÜR ELEKTRISCHE ANLAGEN, SCHALTSCHRANK, ÜBERSPANNUNGSSCHUTZGERÄT UND ADAPTER**

(30) Priorität: 27.03.2025 DE 102025112024
(71) Anmelder: DEHN SE, 92318 Neumarkt i.d. OPf. (DE)
(72) Erfinder: Meyer, Jürgen, 92318 Neumarkt i.d.OPf. (DE); Spangler, Patrick, 92318 Neumarkt i.d.OPf. (DE); Dumhardt, Oliver, 92318 Neumarkt i.d.OPf. (DE); Moosburger, Bernd, 92318 Neumarkt i.d.OPf. (DE)
(74) Vertreter: Prinz & Partner mbB

(57) **Zusammenfassung**

Die Erfindung betrifft eine Baugruppe (16) für elektrische Anlagen, mit wenigstens einer auf einer Tragschiene (14) montierbaren Hochstrom-Einspeiseklemme (18) und wenigstens einem Überspannungsschutzgerät (20). Die Hochstrom-Einspeiseklemme (18) weist einen ersten Leitungsanschluss (22) zur klemmenden Anbindung einer ersten Leitung, einen zweiten Leitungsanschluss (24) zur klemmenden Anbindung einer zweiten Leitung und einen zusätzlichen Spannungsabgriff (26) auf. Das Überspannungsschutzgerät (20) ist mit dem Spannungsabgriff (26) der Hochstrom-Einspeiseklemme (18) elektrisch verbunden. Ferner sind ein Schaltschrank (10), ein Überspannungsschutzgerät (20) sowie ein Adapter (48) beschrieben.

## Beschreibung

Die Erfindung betrifft eine Baugruppe für elektrische Anlagen. Ferner betrifft die Erfindung einen Schaltschrank mit einem Einspeisebereich und einer derartigen Baugruppe. Darüber hinaus betrifft die Erfindung einen Adapter sowie ein Überspannungsschutzgerät.

In elektrischen Anlagen, insbesondere Schaltanlagen, ist es bekannt, Hochstrom-Einspeiseklemmen an Einspeisepunkten der elektrischen Anlagen zu verwenden. Die Hochstrom-Einspeiseklemmen können dabei auf einer Tragschiene montiert werden, beispielsweise auf einer Hutschiene, oder auf einer Montageplatte. Typischerweise weisen die Hochstrom-Einspeiseklemmen einen Klemmenquerschnitt von 35 bis 185 mm² auf, sodass je nach Ausgestaltung der entsprechenden Hochstrom-Einspeiseklemme unterschiedliche Leitungen, insbesondere Versorgungsleitungen, angebunden werden können. Grundsätzlich sind auch Hochstrom-Einspeiseklemmen mit anderen Klemmenquerschnitten bekannt.

Des Weiteren ist es aus dem Stand der Technik bekannt, dass ein Überspannungsschutz vorgesehen ist, um die elektrische Anlage vor einer Überspannung, einer blitzbedingten Beeinflussung oder ähnlichem zu schützen.

Typischerweise werden im Industriebereich oder bei großen elektrischen Anlagen die Überspannungsschutzgeräte auf einer Hutschiene montiert, die entfernt von den Hochstrom-Einspeiseklemmen angeordnet sind. Als nachteilig hat sich hierbei herausgestellt, dass ein großer Abstand zwischen dem Überspannungsschutzgerät und der Hochstrom-Einspeiseklemme vorliegt.

Die Aufgabe der Erfindung ist es, eine kompaktere Anordnung zu ermöglichen.

Die Aufgabe wird erfindungsgemäß gelöst durch eine Baugruppe für elektrische Anlagen, die wenigstens eine auf einer Tragschiene montierbare Hochstrom-Einspeiseklemme und wenigstens ein Überspannungsschutzgerät umfasst. Die Hochstrom-Einspeiseklemme weist einen ersten Leitungsanschluss zur klemmenden Anbindung einer ersten Leitung, einen zweiten Leitungsanschluss zur klemmenden Anbindung einer zweiten Leitung und einen zusätzlichen Spannungsabgriff auf. Das Überspannungsschutzgerät ist mit dem Spannungsabgriff der Hochstrom-Einspeiseklemme elektrisch verbunden.

Der Grundgedanke der Erfindung ist es, das Überspannungsschutzgerät mit der Hochstrom-Einspeiseklemme, nämlich dessen Spannungsabgriff, elektrisch zu verbinden, wodurch eine kompakte Anordnung ermöglicht wird. Der Platzbedarf dieser Baugruppe ist gegenüber den aus dem Stand der Technik bekannten Anordnungen deutlich reduziert, da das Überspannungsschutzgerät in unmittelbarer Nähe zur Hochstrom-Einspeiseklemme angeordnet wird, sodass das Überspannungsschutzgerät so nah wie möglich am Einspeisepunkt der elektrischen Anlage angeordnet werden kann.

Das Überspannungsschutzgerät kann ein Bezugspotenzial über den Spannungsabgriff der Hochstrom-Einspeiseklemme erhalten, da das Überspannungsschutzgerät mit dem Spannungsabgriff elektrisch verbunden ist. Es ist nicht zwingend erforderlich, eine zusätzliche Leitung zu einem anderen Gerät oder Bauteil vorzusehen, um dem Überspannungsschutzgerät das Bezugspotenzial zur Verfügung zu stellen. Hierdurch können die Kosten gesenkt werden.

Grundsätzlich kann der Spannungsabgriff der Hochstrom-Einspeiseklemme blitzstromtragfähig sein, insbesondere bis 12,5 kA. Insofern ist es möglich, das Überspannungsschutzgerät mit dem Spannungsabgriff der Hochstrom-Einspeiseklemme elektrisch zu verbinden.

Die Hochstrom-Einspeiseklemme ist als eine Reihenklemme ausgebildet, sodass mehrere Hochstrom-Einspeiseklemmen direkt nebeneinander angeordnet werden können, um eine Hochstrom-Einspeiseklemmengruppe bereitzustellen. Die mehreren Hochstrom-Einspeiseklemmen können an mehreren Phasen, L1, L2, L3, einem Neutralleiter-Potenzial, N, und/oder einem Schutzleiter-Potenzial, PE, angeschlossen sein. Die entsprechenden Leitungen für die Phasen, den Neutralleiter und/oder den Schutzleiter können klemmend mit der jeweiligen Hochstrom-Einspeiseklemme angeschlossen sein.

Mit der Baugruppe ist es auch möglich, dass eine externe Vorsicherung für das Überspannungsschutzgerät entfallen kann, wodurch Bauteile eingespart und Kosten gesenkt werden können.

Ein Aspekt sieht vor, dass der Spannungsabgriff ein in der Hochstrom-Einspeiseklemme integrierter Testabgriff ist, über den das Überspannungsschutzgerät mit der Hochstrom-Einspeiseklemme elektrisch leitend verbunden ist. Bei dem integrierten Testabgriff kann es sich um einen Abgriff handeln, über den das Bezugspotenzial für die Hochstrom-Einspeiseklemme für Test- oder Messzwecke abgegriffen werden kann, um eine Spannung an der Hochstrom-Einspeiseklemme zu messen. Dieses Bezugspotenzial wird nun für das Überspannungsschutzgerät genutzt, wenn das Überspannungsschutzgerät mit dem integrierten Testabgriff elektrisch verbunden ist.

Insbesondere ist der Testabgriff mittig zwischen zwei Öffnungen in einem Außengehäuse der Hochstrom-Einspeiseklemme vorgesehen, wobei Feststellelemente über die Öffnungen zur klemmenden Anbindung der ersten Leitung und der zweiten Leitung betätigbar sind. Bei den Feststellelementen kann es sich um Schrauben handeln, über die die in dem entsprechenden Leitungsanschluss eingesetzte Leitung geklemmt wird. Mit anderen Worten wird das Feststellelement über die zugehörige Öffnung betätigt, bspw. verdreht, um die entsprechende Leitung zu klemmen. Die Feststellelemente können hierzu mit einem Werkzeug, beispielsweise einem Schraubendreher, betätigt werden, das durch die zugehörige Öffnung eingeführt wird, um das Feststellelement kontaktieren zu können.

Der Test- bzw. Spannungsabgriff kann aber auch an einer anderen Stelle angeordnet sein. Beispielsweise ist der Testabgriff seitlich am Außengehäuse angeordnet. Insbesondere kann der Test- bzw. Spannungsabgriff über einen zum Außengehäuse separat ausgebildeten Einsatz umgeleitet werden. Beispielsweise ist ein als Test- bzw. Spannungsabgriff nutzbarer Kontaktbereich seitlich am Außengehäuse vorgesehen, wobei der separat ausgebildete Einsatz in den Kontaktbereich eingesetzt wird, um eine Kontaktierung an einer Frontseite zu ermöglichen, also der Seite, die für den Nutzer im eingebauten Zustand der Hochstrom-Einspeiseklemme leicht zugänglich ist.

Ferner kann ein Parallelkontakt zum Testabgriff vorgesehen sein, der an einer (lateralen) Seite der Hochstrom-Einspeiseklemme ausgebildet ist, die (im Wesentlichen) senkrecht zur Frontseite der Hochstrom-Einspeiseklemme ist, an der der Testabgriff vorgesehen ist. Der Parallelkontakt und der Testabgriff sind elektrisch leitend miteinander verbunden, sodass sie das gleiche Potenzial haben. Zur Anbindung des Überspannungsschutzgeräts kann dann der Parallelkontakt genutzt werden, der also den Spannungsabgriff darstellt. Hierdurch ist der Spannungsabgriff seitlich an der Hochstrom-Einspeiseklemme vorgesehen, also an einer lateralen Seite der Hochstrom-Einspeiseklemme, wodurch der Testabgriff, der an der Frontseite der Hochstrom-Einspeiseklemme ausgebildet ist, weiterhin für den Nutzer für Test- bzw. Messzwecke nutzbar ist.

Eine seitliche Anordnung des Spannungsabgriffs bietet den Vorteil, dass das Überspannungsschutzgerät seitlich neben der Hochstrom-Einspeiseklemme positioniert werden kann. Dies ist insbesondere bei begrenzten Einbausituationen bzw. Einsatzorten von Vorteil, bspw. in einem Schaltschrank.

Zumindest zur elektrischen Anbindung kann ein Adapter oder ein Einsatz verwendet werden, worüber das Überspannungsschutzgerät und die Hochstrom-Einspeiseklemme, insbesondere der Spannungsabgriff der Hochstrom-Einspeiseklemme, elektrisch miteinander verbunden werden.

Das Überspannungsschutzgerät selbst kann einen elektrischen Kontakt aufweisen, der mit dem in der Hochstrom-Einspeiseklemme integrierten Testabgriff zusammenwirkt, um die elektrische Verbindung herzustellen. Der elektrische Kontakt kann durch einen Steckkontakt, insbesondere einen Bananenstecker, realisiert sein, der mit dem Testabgriff elektrisch leitend verbunden wird. Insofern kann der Testabgriff in einer Buchse ausgebildet sein, in den der Steckkontakt eingesteckt wird. Sofern der elektrische Kontakt, der als Steckkontakt ausgebildet sein kann, direkt am Überspannungsschutzgerät vorgesehen ist, kann die elektrische Verbindung zwischen dem Überspannungsschutzgerät und der Hochstrom-Einspeiseklemme direkt ausgebildet werden. Alternativ kann der elektrische des Überspannungsschutzgeräts als eine Einsteckklemme, auch als Push-In-Klemme bezeichnet, ausgebildet sein, in die ein Steckkontakt eingesteckt werden kann, beispielsweise eines Adapters oder eines Einsatzes.

Ein weiterer Aspekt sieht vor, dass die Hochstrom-Einspeiseklemme einen Rastmechanismus an einer Rückseite der Hochstrom-Einspeiseklemme aufweist, über den die Hochstrom-Einspeiseklemme auf der Tragschiene aufrastbar ist. Die Hochstrom-Einspeiseklemme kann somit in einfacher Weise auf die Tragschiene aufgerastet werden. Beispielsweise handelt es sich bei der Tragschiene um eine Hutschiene, die entsprechend geformt ist, um mit dem Rastmechanismus an der Rückseite der Hochstrom-Einspeiseklemme zusammenzuwirken. Sofern die Hochstrom-Einspeiseklemme (über ihre Rückseite) auf einer Montageplatte befestigt wird, also eine Direktmontage vorliegt, kann der Rastmechanismus an der Rückseite der Hochstrom-Einspeiseklemme entfallen, da der Rastmechanismus zur Befestigung nicht benötigt ist.

Die Rückseite der Hochstrom-Einspeiseklemme ist insbesondere entgegengesetzt zu einer Frontseite der Hochstrom-Einspeiseklemme, an der der Spannungsabgriff vorgesehen sein kann, insbesondere der Testabgriff. Der Spannungsabgriff, insbesondere der Testabgriff, kann also über die Frontseite der Hochstrom-Einspeiseklemme in einfacher Weise kontaktiert werden. Dies vereinfacht die Anbindung im montierten Zustand der Hochstrom-Einspeiseklemme, da die Hochstrom-Einspeiseklemme über die Rückseite auf der Tragschiene montiert ist. Die elektrische Anbindung an die Hochstrom-Einspeiseklemme erfolgt dann über den an der Frontseite zugänglichen Spannungsabgriff.

Alternativ oder ergänzend kann der Spannungsabgriff einer Seite der Hochstrom-Einspeiseklemme zugeordnet sein, die senkrecht zur Rückseite ist, wie vorstehend auch schon erwähnt. Beispielsweise ist der Spannungsabgriff der Seite zugeordnet, an der der erste Leitungsanschluss oder der zweite Leitungsanschluss ist. Die Seite des jeweiligen Leitungsanschlusses ist typischerweise zugänglich, damit die entsprechende Leitung in den Leitungsanschluss eingesetzt werden kann. Dies stellt also sicher, dass der zur elektrischen Anbindung zu kontaktierende Spannungsabgriff zugänglich ist.

Der Spannungsabgriff kann ein Parallelkontakt, beispielsweise ein Brückerkontakt, sein, der in einem parallelen Kontaktierungsabschnitt, beispielsweise einem Brückerschacht, der Hochstrom-Einspeiseklemme vorgesehen ist, welcher typischerweise an derselben Seite wie der zugehörige Leitungsanschluss vorgesehen ist. Von dem Überspannungsschutzgerät wird der im parallelen Kontaktierungsabschnitt, insbesondere im Brückerschacht, angeordnete Spannungsabgriff entsprechend kontaktiert, um das Überspannungsschutzgerät mit der Hochstrom-Einspeiseklemme elektrisch zu verbinden.

Bei der Nutzung des Parallelkontakts kann das Überspannungsschutzgerät neben der Hochstrom-Einspeiseklemme angeordnet werden, also seitlich von der Hochstrom-Einspeiseklemme, bspw. mittels eines Adapters oder Einsatzes.

Die Verbindung zwischen der Hochstrom-Einspeiseklemme, also dem Parallelkontakt der Hochstrom-Einspeiseklemme, und dem Überspannungsschutzgerät kann über einen Adapter bzw. Einsatz erfolgen, was zumindest eine Stiftanschlussklemme aufweist, bspw. für die Kontaktierung des Überspannungsschutzgeräts.

Das Überspannungsschutzgerät kann eine Push-In Klemme aufweisen, worüber die Verbindung mittels des Adapters bzw. Einsatzes erfolgt, insbesondere die entsprechende Stiftanschlussklemme, die in die Push-In Klemme des Überspannungsschutzgeräts eingesteckt wird.

Grundsätzlich stellt ein Parallelkontakt bzw. ein paralleler Kontaktierungsabschnitt eine Kontaktierung sicher, die parallel zum Leitungsanschluss der Hochstrom-Einspeiseklemme, also dem Hauptkontakt der Hochstrom-Einspeiseklemme. Ferner ist der Parallelkontakt bzw. der parallele Kontaktierungsabschnitt parallel zum Testabgriff, der an der Frontseite vorgesehen ist. Der parallele Kontaktierungsabschnitt dient demnach zur parallelen Kontaktierung zum Leitungsanschluss bzw. Hauptkontakt der Hochstrom-Einspeiseklemme. Über den parallelen Kontaktierungsabschnitt kann ebenfalls das am Leitungsanschluss bzw. Hauptkontakt vorliegende Potenzial kontaktiert werden, insbesondere parallel zum Leitungsanschluss bzw. Hauptkontakt (oder Testabgriff).

Ferner kann das Überspannungsschutzgerät direkt an der Hochstrom-Einspeiseklemme mechanisch befestigt sein. Hierdurch ergibt sich ein besonders kompakter Aufbau, da das Überspannungsschutzgerät auf der Hochstrom-Einspeiseklemme oder an der Hochstrom-Einspeiseklemme mechanisch befestigt ist. Beispielsweise ist das Überspannungsschutzgerät auf der Hochstrom-Einspeiseklemme aufgerastet, an der Hochstrom-Einspeiseklemme angeclipst oder mit wenigstens einem Befestigungsmittel an der Hochstrom-Einspeiseklemme befestigt.

Es kann an der Hochstrom-Einspeiseklemme ein Hinterschnitt vorgesehen sein, in den ein am Überspannungsschutzgerät vorgesehenes Federelement einrastet. Hierdurch ergibt sich die direkte mechanische Anbindung des Überspannungsschutzgeräts an der Hochstrom-Einspeiseklemme. Zwischen dem Überspannungsschutzgerät und der Hochstrom-Einspeiseklemme kann also (auch) ein Rastmechanismus vorgesehen sein, über den die mechanische Befestigung realisiert ist.

Des Weiteren kann das Überspannungsschutzgerät direkt mit dem Spannungsabgriff der Hochstrom-Einspeiseklemme elektrisch verbunden sein. Dies lässt sich in einfacher Weise dadurch realisieren, dass das Überspannungsschutzgerät einen elektrischen Kontakt aufweist, der mit dem Spannungsabgriff der Hochstrom-Einspeiseklemme direkt interagiert, beispielsweise in Form eines Steckkontakts, insbesondere in Form eines Bananensteckers. Mit anderen Worten kann eine Steckverbindung vorgesehen sein, über die die elektrische Verbindung zwischen dem Überspannungsschutzgerät und dem Spannungsabgriff der Hochstrom-Einspeiseklemme realisiert ist. Der Spannungsabgriff ist demnach durch eine Buchse ausgebildet, in die der Steckkontakt des Überspannungsschutzgeräts eingesteckt wird, wodurch die direkte elektrische Verbindung zwischen dem Überspannungsschutzgerät und dem Spannungsabgriff der Hochstrom-Einspeiseklemme realisiert ist.

Alternativ kann ein elektrischer Leiter zwischen der Hochstrom-Einspeiseklemme und dem Überspannungsschutzgerät vorgesehen sein, der separat zur Hochstrom-Einspeiseklemme und zum Überspannungsschutzgerät ausgebildet ist. Insofern kann ein zusätzlicher elektrischer Leiter, bspw. eine Leitung, ein Kabel oder ähnliches, vorgesehen sein, um das Überspannungsschutzgerät mit der Hochstrom-Einspeiseklemme elektrisch zu verbinden, insbesondere dessen Spannungsabgriff.

Insbesondere kann eine Breite des elektrischen Leiters anpassbar sein, beispielsweise durch vorgeprägte Bereiche an zumindest einem Ende des elektrischen Leiters.

Der elektrische Leiter kann also ein universell einsetzbarer Leiter sein, über den die elektrisch leitende Verbindung zwischen dem Spannungsabgriff und dem Überspannungsschutzgerät herstellt wird. Aufgrund der anpassbaren Breite lässt sich der Leiter zudem bei unterschiedlichen Klemmengrößen der Hochstrom-Einspeiseklemme einsetzen, da die Breite an die jeweilige Klemmengröße angepasst werden kann.

Generell kann der elektrische Leiter ein Flachleiter sein oder einen runden Querschnitt aufweisen, wobei endseitig ein Flachleiterabschnitt vorgesehen ist, über den die Anbindung erfolgt. Die Breite des endseitigen Flachleiterabschnitts ist demnach anpassbar, insbesondere über vorgeprägte Bereiche im endseitigen Flachleiterabschnitt. Beispielsweise lassen sich entsprechende Bereiche mit einem Werkzeug wie einer Zange herausbrechen, um die Breite anzupassen.

Grundsätzlich kann der elektrische Leiter auch ein Rundleiter sein, insbesondere durchgehend einen runden Querschnitt aufweisen.

Der elektrische Leiter ist insbesondere außenseitig mit einer elektrischen Isolierung versehen.

Eine weitere Ausführungsform sieht vor, dass die Baugruppe einen Adapter umfasst, der zur elektrischen und/oder mechanischen Verbindung des Überspannungsschutzgeräts mit der Hochstrom-Einspeiseklemme vorgesehen ist. Der Adapter kann also als Adapter zur mechanischen Befestigung des Überspannungsschutzgeräts an der Hochstrom-Einspeiseklemme und/oder als Adapter zur elektrischen Anbindung des Überspannungsschutzgeräts an die Hochstrom-Einspeiseklemme dienen. Es kann also eine direkte mechanische Befestigung des Überspannungsschutzgeräts an der Hochstrom-Einspeiseklemme vorgesehen sein, wobei der Adapter genutzt wird, um die elektrische Verbindung herzustellen. Ebenso kann der Adapter genutzt werden, um das Überspannungsschutzgerät mechanisch mit der Hochstrom-Einspeiseklemme zu befestigen, wobei eine direkte elektrische Verbindung zwischen dem Überspannungsschutzgerät und dem Überspannungsschutzgerät vorliegt. Es ist ebenfalls möglich, dass der Adapter genutzt wird, um das Überspannungsschutzgerät mit der Hochstrom-Einspeiseklemme sowohl mechanisch als auch elektrisch zu verbinden.

Der Adapter kann als eine Montageplatte ausgebildet sein, sofern der Adapter zumindest als mechanische Befestigung des Überspannungsschutzgeräts an der Hochstrom-Einspeiseklemme fungieren soll. Die Montageplatte kann an einer Tragschiene oder an einem anderen Punkt befestigt sein.

Insbesondere weist der als Montageplatte ausgebildete Adapter einen Einsteckkontakt auf, um die elektrische Verbindung mit der wenigstens einen Hochstrom-Einspeiseklemme herzustellen. Der Einsteckkontakt kann in einen parallelen Kontaktierungsabschnitt, insbesondere in einen Brückerschacht, der Hochstrom-Einspeiseklemme eingesteckt werden, um die elektrische Verbindung zwischen dem am Adapter angeordneten Überspannungsschutzgerät und der Hochstrom-Einspeiseklemme auszubilden.

Ein Aspekt sieht vor, dass die Hochstrom-Einspeiseklemme eine Vertiefung aufweist, über die der Adapter mit der Hochstrom-Einspeiseklemme mechanisch lösbar gekoppelt ist. Ein Hinterschnitt kann im Bereich der Vertiefung vorgesehen sein, in den ein am Adapter vorgesehenes Federelement einrastet. Hierdurch ergibt sich in einfacher Weise die mechanische Verbindung zwischen dem Adapter und der Hochstrom-Einspeiseklemme. Das Überspannungsschutzgerät kann mit dem Adapter befestigt werden, indem Befestigungsmittel, insbesondere Schrauben, genutzt werden. Die Befestigungsmittel stellen grundsätzlich eine form- und/oder kraftschlüssige Verbindung her.

Alternativ kann vorgesehen sein, dass der Adapter wenigstens einen Sockel für das Überspannungsschutzgerät aufweist, indem das Überspannungsschutzgerät einsetzbar ist. Der Sockel dient somit als Aufnahme für das entsprechende Überspannungsschutzgerät, das Anschlüsse aufweist, die mit Anschlüssen im Sockel zusammenwirken.

Generell stellt der Adapter (mit Sockel) sicher, dass standardisierte Überspannungsschutzgeräte verwendet werden können.

Da sowohl der Adapter als auch das Überspannungsschutzgerät das Federelement aufweisen kann, welches mit dem Hinterschnitt in der Vertiefung der Hochstrom-Einspeiseklemme zusammenwirkt, ist die Hochstrom-Einspeiseklemme grundsätzlich geeignet sowohl direkt mit einem Überspannungsschutzgerät mechanisch gekoppelt zu werden als auch direkt mit dem Adapter, um eine indirekte mechanische Verbindung des Überspannungsschutzgeräts vorzusehen.

Der Adapter kann grundsätzlich ausgebildet sein, mehrere Überspannungsschutzgeräte mit der wenigstens einen Hochstrom-Einspeiseklemme zu koppeln. Insbesondere kann der Adapter auch genutzt werden, mehrere Überspannungsschutzgeräte mit mehreren Hochstrom-Einspeiseklemmen zu koppeln, die als Reinklemmen ausgebildet und nebeneinander angeordnet sind. Es kann jeder Hochstrom-Einspeiseklemme ein Überspannungsschutzgerät zugeordnet sein, sodass jeweils eine elektrische Verbindung zwischen einem Überspannungsschutzgerät und einem Hochstrom-Einspeiseklemme vorliegt, damit das entsprechende Bezugspotenzial über einen Spannungsabgriff abgegriffen werden kann.

Die mechanische Befestigung kann dagegen an weniger Stellen erfolgen als der Anzahl der Hochstrom-Einspeiseklemmen. Insofern können auch bei drei oder mehr Hochstrom-Einspeiseklemmen, beispielsweise fünf Hochstrom-Einspeiseklemmen, lediglich zwei Stellen vorgesehen sein, über die der Adapter mit den mehreren Hochstrom-Einspeiseklemmen gekoppelt ist. Insbesondere an den außenliegenden der als Reihenklemmen ausgebildeten Hochstrom-Einspeiseklemmen sind die mechanischen Anbindungen vorgesehen, beispielsweise in Form der Vertiefung mit Hinterschnitt, in die ein am Adapter vorgesehenes Federelement entsprechend einrastet.

Sofern eine große Anzahl an Hochstrom-Einspeiseklemmen nebeneinander angeordnet sind, beispielsweise zehn oder mehr Hochstrom-Einspeiseklemmen, kann zudem zumindest mittig ein weiteres mechanisches Befestigungssystem vorgesehen sein, die mechanische Befestigung zu verstärken.

Des Weiteren kann der Adapter einen Verriegelungsmechanismus aufweisen, über den die mechanische Verbindung des Überspannungsschutzgeräts mit dem Adapter und/oder der Hochstrom-Einspeiseklemme in einer Verriegelungsstellung verriegelt werden kann, sodass das Überspannungsschutzgerät zusätzlich mechanisch gesichert ist. Hierdurch ist gewährleistet, dass ein versehentliches Trennen des Überspannungsschutzgeräts nicht möglich ist. Darüber hinaus kann über die zusätzliche Verriegelung sichergestellt werden, dass aufgrund einer thermischen und/oder elektrischen Belastung im Betrieb der Baugruppe das Überspannungsschutzgerät an der vorgesehenen Stelle verbleibt. Mit anderen Worten stellt der Verriegelungsmechanismus in der verriegelten Stellung sicher, dass das Überspannungsschutzgerät beim Eintreten eines Überspannungsereignisses durch elektromagnetische Kräfte nicht von der Hochstrom-Einspeiseklemme abgedrückt wird.

Insbesondere weist der Verriegelungsmechanismus ein Verriegelungselement auf, an dem eine Verriegelungskontur vorgesehen ist. Das Verriegelungselement kann an einem Verriegelungshebel ausgebildet sein. Der Verriegelungshebel kann das Verriegelungselement zwischen einer Entriegelungsstellung und der Verriegelungsstellung verstellen, sodass die Verriegelungskontur mit einer entsprechenden Gegenkontur in der Verriegelungsstellung zusammenwirkt, um die Befestigung zu verriegeln. Hierbei kann ein Formschluss vorliegen. Die Gegenkontur kann durch das am Überspannungsschutzgerät vorgesehene Federelement ausgebildet sein bzw. das am Adapter vorgesehene Federelement.

Gemäß einem weiteren Aspekt ist das Überspannungsschutzgerät relativ zur Hochstrom-Einspeiseklemme verschiebbar, um eine Endstellung zu erreichen. Das Überspannungsschutzgerät ist nur in der Endstellung mit der Hochstrom-Einspeiseklemme elektrisch verbunden. Das Überspannungsschutzgerät kann demnach auf die Hochstrom-Einspeiseklemme aufgeschoben werden, um die elektrische Verbindung in der Endstellung herzustellen. Die Endstellung kann dabei durch einen Anschlag realisiert sein.

Insbesondere ist das Überspannungsschutzgerät zusammen mit dem Adapter relativ zur Hochstrom-Einspeiseklemme verschiebbar, um die elektrische Verbindung herzustellen. Insofern wird das Überspannungsschutzgerät zusammen mit dem Adapter relativ zur Hochstrom-Einspeiseklemme verschoben, um die elektrische Verbindung zwischen dem Überspannungsschutzgerät und der Hochstrom-Einspeiseklemme herzustellen, beispielsweise über den Adapter, an dem das Überspannungsschutzgerät angeordnet ist.

Bei dem Verschieben werden Kontakte des Überspannungsschutzgeräts bzw. des Adapters in entsprechende Gegenkontakte eingeschoben, die entweder direkt an der jeweiligen Hochstrom-Einspeiseklemme oder indirekt über einen Leiter realisiert sind, der mit der Hochstrom-Einspeiseklemme verbunden ist. Hierdurch wird die elektrische Verbindung zwischen dem Überspannungsschutzgerät und der Hochstrom-Einspeiseklemme realisiert.

Ferner kann die Hochstrom-Einspeiseklemme zumindest einen ersten parallelen Kontaktierungsabschnitt, beispielsweise einen ersten Brückerschacht, aufweisen, in dem der Spannungsabgriff vorgesehen ist. Die elektrische Verbindung wird somit über den ersten parallelen Kontaktierungsabschnitt realisiert, da das Überspannungsschutzgerät mit dem im parallelen Kontaktierungsabschnitt vorgesehenen Spannungsabgriff elektrisch verbunden wird. Die Hochstrom-Einspeiseklemme kann einen zweiten parallelen Kontaktierungsabschnitt, beispielsweise einen zweiten Brückerschacht, aufweisen, über den das Überspannungsschutzgerät in der Hochstrom-Einspeiseklemme mechanisch befestigt ist. Somit können Hochstrom-Einspeiseklemmen genutzt werden, die typischerweise zwei parallele Kontaktierungsabschnitte, insbesondere zwei Brückerschächte, aufweisen, die den Leitungsanschlüssen zugeordnet sind. Einer dieser beiden parallelen Kontaktierungsabschnitte wird zur elektrischen Anbindung des Überspannungsschutzgeräts verwendet, wohingegen der andere parallele Kontaktierungsabschnitt zur mechanischen Anbindung genutzt wird. Ein elektrischer Leiter kann somit in den ersten parallelen Kontaktierungsabschnitt eingesetzt sein, wohingegen eine mechanische Befestigungskomponente in den zweiten parallelen Kontaktierungsabschnitt eingesetzt ist.

In dem entsprechenden parallelen Kontaktierungsabschnitt ist typischerweise ein Parallelkontakt vorgesehen, der als Spannungsabgriff genutzt werden kann.

Ferner kann ein Kontaktsystem vorhanden sein, das wenigstens einen Kontaktstift und eine Kontaktachse aufweist, in die der Kontaktstift eingesteckt ist, um die elektrische Verbindung zwischen dem Überspannungsschutzgerät und dem Spannungsabgriff der Hochstrom-Einspeiseklemme auszubilden. Somit ist eine Steckverbindung zwischen dem Überspannungsschutzgerät und der Hochstrom-Einspeiseklemme vorgesehen, um die elektrische Verbindung zu realisieren.

Die Steckverbindung kann direkt zwischen dem Überspannungsschutzgerät und der Hochstrom-Einspeiseklemme ausgebildet sein, wie vorstehend schon erläutert.

Es ist aber auch möglich, dass die Steckverbindung zwischen der Hochstrom-Einspeiseklemme und dem Adapter ausgebildet ist, mit dem das Überspannungsschutzgerät elektrisch und mechanisch gekoppelt ist.

Insbesondere ist die Kontaktbuchse oder der Kontaktstift mit dem ersten parallelen Kontaktierungsabschnitt verbunden. Eines der Kontaktelemente kann in den parallelen Kontaktierungsabschnitt eingesetzt sein, das die Kontaktbuchse oder den Kontaktstift aufweist, um entsprechend vom anderen Kontaktelement kontaktiert zu werden. Das andere Kontaktelement kann mit dem Adapter oder dem Überspannungsschutzgerät gekoppelt sein.

Darüber hinaus kann die Baugruppe einen Prüfabgriff aufweisen. Der Prüfabgriff kann am Überspannungsschutzgerät und/oder an einer elektrisch leitenden Verbindung zwischen dem Überspannungsschutzgerät und der Hochstrom-Einspeiseklemme vorgesehen sein, beispielsweise an dem separat ausgebildeten elektrischen Leiter, der zur elektrischen Verbindung des Überspannungsschutzgeräts mit der Hochstrom-Einspeiseklemme vorgesehen ist. Der Prüfabgriff ersetzt den in der Hochstrom-Einspeiseklemme integrierten Testabgriff, sofern dieser bspw. vom Überspannungsschutzgerät zur elektrischen Verbindung genutzt bzw. verdeckt ist, wenn das Überspannungsschutzgerät auf der Hochstrom-Einspeiseklemme angeordnet ist. Hierdurch lässt sich die Testfunktionalität, die eigentlich über den Testabgriff der Hochstrom-Einspeiseklemme gewährleistet werden sollte, weiterhin nutzen. Mit anderen Worten wird der entsprechende Abgriff, über den die Tests bzw. die Messung durchgeführt werden können, von der Hochstrom-Einspeiseklemme an das Überspannungsschutzgerät bzw. in die elektrisch leitende Verbindung umgelegt, sodass keine Funktionalitätseinbußen vorliegen.

Ferner wird die Aufgabe erfindungsgemäß gelöst durch einen Schaltschrank mit einem Einspeisebereich und einer Baugruppe der zuvor genannten Art. Die Baugruppe ist im Einspeisebereich angeordnet, der eine Tragschiene aufweist. Auf der Tragschiene, die insbesondere eine Hutschiene ist, kann die Hochstrom-Einspeiseklemme und/oder das Überspannungsschutzgerät direkt angeordnet sein. In jedem Fall kann die Baugruppe direkt an der Tragschiene montiert werden.

Das Überspannungsschutzgerät und die Hochstrom-Einspeiseklemme können als Stapel oder nebeneinander an der Tragschiene montiert sein. Insofern ergeben sich zahlreiche Möglichkeiten, um die Baugruppe im Einspeisebereich des Schaltschranks anzuordnen.

Beispielsweise ist das Überspannungsschutzgerät, in Frontalansicht auf den Einspeisebereich, zwischen der Tragschiene und der Hochstrom-Einspeiseklemme angeordnet. Mit anderen Worten ist das Überspannungsschutzgerät direkt auf der Tragschiene montiert, wobei die Hochstrom-Einspeiseklemme an dem Überspannungsschutzgerät angeordnet ist. Alternativ kann die Hochstrom-Einspeiseklemme, in Frontalansicht auf den Einspeisebereich, zwischen der Tragschiene und Überspannungsschutzgerät angeordnet sein. In dem Fall ist die Hochstrom-Einspeiseklemme direkt an der Tragschiene montiert, wohingegen das Überspannungsschutzgerät an der Hochstrom-Einspeiseklemme angeordnet ist. Die relative Anordnung der Komponenten der Baugruppe kann somit variiert werden. Neben diesen beiden Stapelanordnungen ist es aber auch möglich, dass die Komponenten der Baugruppe benachbart zueinander angeordnet sind, insbesondere direkt benachbart zueinander.

In jedem Fall grenzen die Komponenten der Baugruppe, also das Überspannungsschutzgerät und die wenigstens eine Hochstrom-Einspeiseklemme (direkt) aneinander an.

Ferner wird die Aufgabe erfindungsgemäß gelöst durch ein Überspannungsschutzgerät für eine Baugruppe der zuvor genannten Art. Das Überspannungsschutzgerät umfasst wenigstens eine elektrische Kontaktschnittstelle zur Kontaktierung des zusätzlichen Spannungsabgriffs der Hochstrom-Einspeiseklemme sowie wenigstens eine Befestigungsschnittstelle zur Befestigung des Überspannungsschutzgeräts. Die elektrische Kontaktschnittstelle und/oder die Befestigungsschnittstelle sind bzw. ist positionsveränderbar, sodass das Überspannungsschutzgerät mit unterschiedlichem Hochstrom-Einspeiseklemmen elektrisch und/oder mechanisch verbindbar ist. Aufgrund der relativen Positionsveränderung der elektrischen Kontaktschnittstelle und/oder der Befestigungsschnittstelle ist es möglich, dass das Überspannungsschutzgerät mit unterschiedlich dimensionierten Hochstrom-Einspeiseklemmen elektrisch und/oder mechanisch verbindbar ist. Die elektrische Kontaktschnittstelle und/oder die Befestigungsschnittstelle werden bzw. wird an die unterschiedliche Geometrie der Hochstrom-Einspeiseklemmen angepasst, indem die entsprechende Position(en) verändert werden bzw. wird.

Darüber hinaus wird die Aufgabe erfindungsgemäß gelöst durch einen Adapter zur elektrischen Anbindung und mechanischen Befestigung eines Überspannungsschutzgeräts an einer Hochstrom-Einspeiseklemme. Der Adapter umfasst wenigstens eine elektrische Kontaktschnittstelle zur Kontaktierung eines zusätzlichen Spannungsabgriffs der Hochstrom-Einspeiseklemme sowie wenigstens eine Befestigungsschnittstelle zur Befestigung an der Hochstrom-Einspeiseklemme. Die elektrische Kontaktschnittstelle und/oder die Befestigungsschnittstelle sind bzw. ist positionsveränderbar, sodass das Überspannungsschutzgerät über den Adapter mit unterschiedlich dimensionierten Hochstrom-Einspeiseklemmen elektrisch und/oder mechanisch verbindbar ist. Hierzu werden bzw. wird die elektrische Kontaktschnittstelle und/oder die Befestigungsschnittstelle an die unterschiedliche Geometrie der Hochstrom-Einspeiseklemmen angepasst, indem die entsprechende Position(en) verändert werden bzw. wird.

Das Überspannungsschutzgerät und/oder der Adapter kann also an verschiedene Baugrößen der Hochstrom-Einspeiseklemme angepasst werden. Die verschiedenen Baugrößen der Hochstrom-Einspeiseklemme sind für die unterschiedlichen Anschlussquerschnitte der Zuleitungen vorgesehen.

Aufgrund der positionsveränderbaren Befestigungsschnittstelle bzw. elektrischen Kontaktschnittstelle ist somit ein universell verwendbares Überspannungsschutzgerät bzw. ein universell verwendbarer Adapter realisiert.

Generell kann bei der Baugruppe vorgesehen sein, dass das Überspannungsschutzgerät in Draufsicht auf die Baugruppe über, rechts von, unter oder links von der Hochstrom-Einspeiseklemme angeordnet ist, also (direkt) benachbart zur Hochstrom-Einspeiseklemme. Es ist auch möglich, dass das Überspannungsschutzgerät in Draufsicht auf die Baugruppe unterhalb (hinter) oder oberhalb (vor) der Hochstrom-Einspeiseklemme angeordnet ist, also in einer Stapelanordnung. Hierdurch lässt sich eine kompakte Anordnung realisieren, wodurch der benötigte Bauraum für die Baugruppe im Schaltschrank minimiert wird.

Die Baugruppe kann grundsätzlich für jede der Phasen, bspw. L1, L2, L3, eine eigene Hochstrom-Einspeiseklemme aufweisen. Insofern kann die Baugruppe mehrere Hochstrom-Einspeiseklemmen umfassen, die insbesondere als Reihenklemmen ausgebildet sind. Es kann für jede der Phasen ein eigenes Überspannungsschutzgerät vorgesehen sein.

Es ist auch möglich, das Überspannungsschutzgerät über eine entsprechende Hochstrom-Einspeiseklemme mit dem Neutralleiter-Potenzial, N, und/oder dem Schutzleiter-Potenzial, PE, zu verbinden.

Die elektrische Verbindung des Überspannungsschutzgeräts mit der Hochstrom-Einspeiseklemme, insbesondere dem jeweiligen Spannungsabgriff der Hochstrom-Einspeiseklemme, kann über eine elektrisch leitende Verbindung, insbesondere einem separat ausgebildeten elektrischen Leiter oder im Überspannungsschutzgerät und der Hochstrom-Einspeiseklemme integrierte elektrische Kontakte, realisiert sein.

Das Überspannungsschutzgerät kann also an der jeweiligen Hochstrom-Einspeiseklemme entweder über den Testabgriff, der üblicherweise zur Spannungsmessung verwendet wird, oder über parallele Kontaktierungsabschnitte wie Brückerschächte, auch Brückeraufnahmen genannt, die üblicherweise zum parallelen Anschluss von Brückern, Potentialabgriffen oder Strom- und Spannungsabgriffen, allgemein als Parallelkontaktelement bezeichnet, für die Energiemessung gedacht sind, angeschlossen werden.

Das Überspannungsschutzgerät und/oder der Adapter können bzw. kann so ausgebildet sein, dass zur Klemmung der Leitungen an der Hochstrom-Einspeiseklemme vorgesehene Betätigungsstellen durch das Aufsetzen des Überspannungsschutzgeräts bzw. des Adapters auf die Hochstrom-Einspeiseklemme nicht verdeckt werden, insbesondere die Öffnungen, über die die Feststellelemente zugänglich sind. Insofern ist sichergestellt, dass auch im montierten Zustand des Überspannungsschutzgeräts weiterhin ein An- und/oder Abklemmen von Leitungen an der Hochstrom-Einspeiseklemme möglich ist.

Sofern die Hochstrom-Einspeiseklemme die parallelen Kontaktierungsabschnitte, insbesondere die Brückerschächte, aufweist, kann auch das in den parallelen Kontaktierungsabschnitt eingeführte Parallelkontaktelement mittels des zugeordneten Feststellelements geklemmt werden. Alternativ kann vorgesehen sein, dass separat ausgebildete Feststellelemente zur Klemmung der in die parallelen Kontaktierungsabschnitte eingeführte Parallelkontaktelemente vorgesehen sind.

Weitere Vorteile und Eigenschaften der vorliegenden Erfindung ergeben sich aus den nachfolgenden Beschreibung und den Zeichnungen, auf die Bezug genommen wird. In den Zeichnungen zeigen:
- Figur 1 eine schematische Darstellung eines erfindungsgemäßen Schaltschranks mit einer erfindungsgemäßen Baugruppe,
- Figur 2 eine Frontalansicht auf eine erfindungsgemäße Baugruppe gemäß einer ersten Ausführungsform,
- Figur 3 die Baugruppe der Figur 2 in einer Seitenansicht,
- Figur 4 eine Schnittdarstellung einer Hochstrom-Einspeiseklemme, die bei einer erfindungsgemäßen Baugruppe verwendet wird,
- Figur 5 eine schematische Darstellung eines erfindungsgemäßen Adapters, der bei der erfindungsgemäßen Baugruppe verwendet wird,
- Figur 6 eine schematische Schnittdarstellung einer erfindungsgemäßen Baugruppe im zusammengebauten Zustand,
- Figur 7 eine perspektivische Ansicht mehrerer Hochstrom-Einspeiseklemmen, die als Reihenklemmen ausgebildet sind und eine Hochstrom-Einspeiseklemmengruppe bilden,
- Figur 8 eine schematische Perspektivdarstellung einer erfindungsgemäßen Baugruppe, mit einer teiltransparent dargestellten Hochstrom-Einspeiseklemme und einem erfindungsgemäßen Adapter,
- Figur 9 eine perspektivische Ansicht eines erfindungsgemäßen Adapters für eine erfindungsgemäße Baugruppe,
- Figur 10 eine perspektivische Schnittdarstellung einer erfindungsgemäßen Baugruppe,
- Figur 11 eine perspektivische Ansicht der erfindungsgemäßen Baugruppe aus Figur 10,
- Figur 12 ein Detail einer erfindungsgemäßen Baugruppe, bei der ein Verriegelungsmechanismus gezeigt ist, der sich in einer Entriegelungsstellung befindet,
- Figur 13 die Baugruppe aus Figur 12 in der Verriegelungsstellung des Verriegelungsmechanismus,
- Figur 14 ein Detail des Verriegelungsmechanismus aus den Figuren 12 und 13,
- Figur 15 das Detail der Figur 14 in einer anderen Perspektive,
- Figur 16 eine perspektivische Ansicht einer erfindungsgemäßen Baugruppe gemäß einer weiteren Ausführungsform, die eine Steckverbindung umfasst,
- Figur 17 die Baugruppe aus Figur 16 in einer Explosionsansicht bezüglich der Steckverbindung,
- Figur 18 eine erfindungsgemäße Baugruppe gemäß einer weiteren Ausführungsform in einer Perspektivdarstellung,
- Figur 19 ein Teil der in Figur 18 gezeigten Baugruppe,
- Figur 20 die Baugruppe aus Figur 18 während der Montage,
- Figur 21 eine schematische Darstellung einer erfindungsgemäßen Baugruppe,
- Figur 22 eine schematische Darstellung einer erfindungsgemäßen Baugruppe,
- Figur 23 eine schematische Darstellung eines elektrischen Leiters, der bei der erfindungsgemäßen Baugruppe verwendet werden kann,
- Figur 24 eine alternative Ausgestaltung des elektrischen Leiters, der bei der erfindungsgemäßen Baugruppe verwendet werden kann,
- Figur 25 eine schematische Perspektivdarstellung einer erfindungsgemäßen Baugruppe gemäß einer weiteren Ausführungsform,
- Figur 26 eine Übersicht zwei verschiedener Arten von Hochstrom-Einspeiseklemmen, die als Reihenklemmen ausgebildet sind und jeweils Hochstrom-Einspeiseklemmengruppen bilden,
- Figur 27 eine Seitenansicht eines erfindungsgemäßen Adapters,
- Figur 28 eine Darstellung, die eine verschiebbare elektrische Verbindung verdeutlicht, die beim erfindungsgemäßen Adapter oder beim erfindungsgemäßen Überspannungsschutzgerät verwendet werden kann,
- Figur 29a und Figur 29b eine schematische Darstellung einer erfindungsgemäßen Baugruppe gemäß einer weiteren Ausführungsform in einer Vorder- und Seitenansicht,
- Figur 30a und Figur 30b eine schematische Darstellung einer erfindungsgemäßen Baugruppe gemäß einer weiteren Ausführungsform in einer Vorder- und Seitenansicht,
- Figur 31a und Figur 31b eine schematische Darstellung einer erfindungsgemäßen Baugruppe gemäß einer weiteren Ausführungsform in einer Vorder- und Seitenansicht,
- Figur 32a und Figur 32b eine schematische Darstellung einer erfindungsgemäßen Baugruppe gemäß einer weiteren Ausführungsform in einer Vorder- und Seitenansicht,
- Figur 33a und Figur 33b eine schematische Darstellung einer erfindungsgemäßen Baugruppe gemäß einer weiteren Ausführungsform in einer Seiten- und Vorderansicht,
- Figur 34a und Figur 34b jeweils eine perspektivische Darstellung einer Hochstrom-Einspeiseklemme, bei der ein zur Hochstrom-Einspeiseklemme separat ausgebildeter Einsatz vorgesehen ist, um den Spannungsabgriff zu kontaktieren,
- Figur 35a und Figur 35b die Hochstrom-Einspeiseklemme der Figuren 34a und 34b in einer Explosionsdarstellung,
- Figur 36 eine schematische Seitenansicht einer erfindungsgemäßen Baugruppe im montierten Zustand, mit der Hochstrom-Einspeiseklemme aus den Figuren 34b und 35b und einem Einsatz sowie einem Überspannungsschutzgerät,
- Figur 37 eine schematische Seitenansicht einer erfindungsgemäßen Baugruppe gemäß einer anderen Ausführungsform, und
- Figur 38 eine schematische Seitenansicht einer erfindungsgemäßen Baugruppe gemäß einer weiteren Ausführungsform.

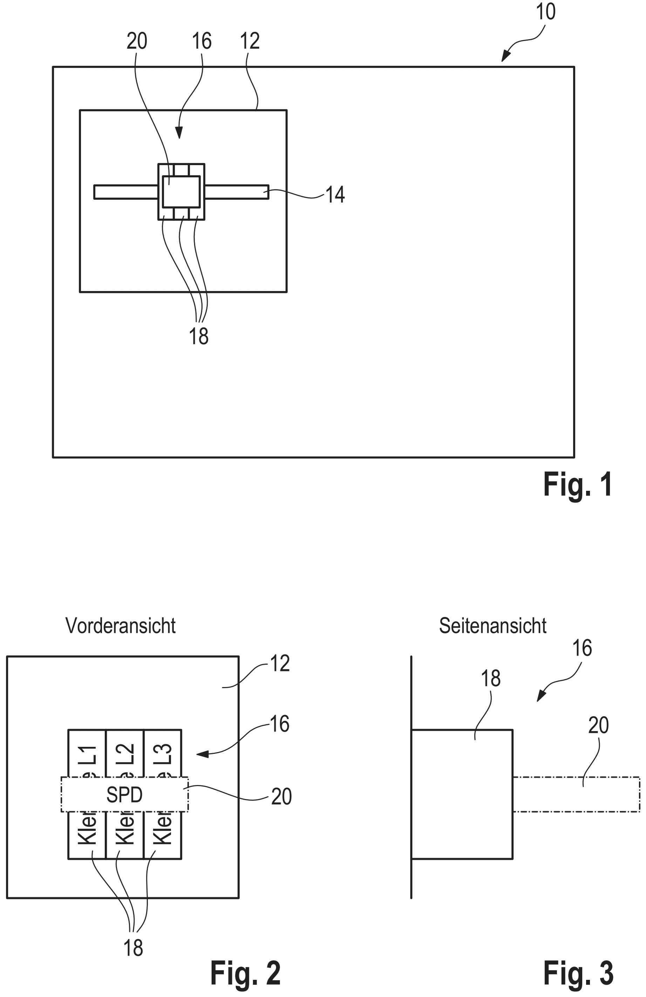

In Figur 1 ist ein Schaltschrank 10 für eine elektrische Anlage gezeigt, der einen Einspeisebereich 12 aufweist, in dem eine Tragschiene 14 vorgesehen ist. Bei der Tragschiene 14 kann es sich um eine Hutschiene handeln.

In dem Schaltschrank 10 ist eine Baugruppe 16 vorgesehen, die in der gezeigten Ausführungsform drei Hochstrom-Einspeiseklemmen 18 aufweist, die direkt nebeneinander angeordnet sind, also direkt aneinander angrenzen. Insofern handelt es sich bei den Hochstrom-Einspeiseklemmen 18 um Reihenklemmen. Die drei Hochstrom-Einspeiseklemmen 18 sind beispielsweise den Phasen L1, L2, L3 zugeordnet.

Die Baugruppe 16 umfasst zudem ein Überspannungsschutzgerät 20, das in der gezeigten Ausführungsform direkt mit zumindest einer der Hochstrom-Einspeiseklemmen 18 mechanisch und elektrisch verbunden ist. Konkret ist das Überspannungsschutzgerät 20, in Frontalansicht auf den Einspeisebereich 12, derart mit der wenigstens einen Hochstrom-Einspeiseklemme 18 gekoppelt, dass die Hochstrom-Einspeiseklemme 18 zwischen der Tragschiene 14 und dem Überspannungsschutzgerät 20 angeordnet ist. Mit anderen Worten ist das Überspannungsschutzgerät 20 auf den Hochstrom-Einspeiseklemmen 18 angeordnet, sodass sich ein Stapel ausbildet, wie dies auch aus den Figuren 2 und 3 deutlich wird, die eine ähnliche Baugruppe 16 zeigen wie diejenige, die beim Schaltschrank 10 in Figur 1 verwendet worden ist.

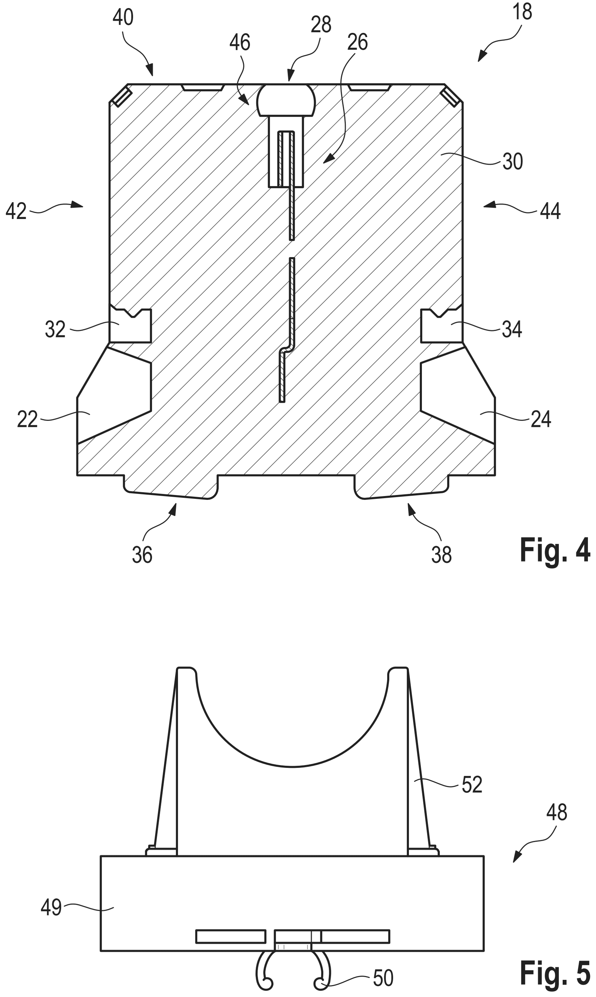

Die Hochstrom-Einspeiseklemme 18, die bei der Baugruppe 16 verwendet wird, ist in Figur 4 detailliert gezeigt. Hieraus geht hervor, dass die Hochstrom-Einspeiseklemme 18 einen ersten Leitungsanschluss 22 zur klemmenden Anbindung einer ersten Leitung sowie einen zweiten Leitungsanschluss 24 zur klemmenden Anbindung einer zweiten Leitung aufweist. Zumindest eine der beiden Leitungen kann eine Versorgungsleitung für die elektrische Anlage sein.

Darüber hinaus umfasst die Hochstrom-Einspeiseklemme 18 einen Spannungsabgriff 26, der einer Vertiefung 28 im Außengehäuse 30 der Hochstrom-Einspeiseklemme 18 vorgesehen ist.

Der Spannungsabgriff 26 ist demnach in der Hochstrom-Einspeiseklemme 18 integriert.

Insbesondere wird über den Spannungsabgriff 26 ein Bezugspotenzial bereitgestellt, was genutzt werden kann, wie nachfolgend noch detailliert erläutert wird.

Die Hochstrom-Einspeiseklemme 18 weist neben den beiden Leitungsanschlüssen 22, 24 noch einen ersten parallelen Kontaktierungsabschnitt 32 sowie einen zweiten parallelen Kontaktierungsabschnitt 34 auf, die an denselben Seiten wie die jeweiligen Leitungsanschlüsse 22, 24 vorgesehen sind. Bei den parallelen Kontaktierungsabschnitten 32, 34 kann es sich um Brückerschächte handeln.

In den parallelen Kontaktierungsabschnitten 32, 34 sind Parallelkontakte, insbesondere Brückerkontakte, vorgesehen, über die sich ebenfalls ein Bezugspotenzial abgreifen lässt, weswegen der Spannungsabgriff 26 auch den parallelen Kontaktierungsabschnitten 32, 34 zugeordnet sein kann, insbesondere durch den jeweiligen im parallelen Kontaktierungsabschnitt 32, 34 vorgesehenen Parallelkontakt ausgebildet sein kann.

Darüber hinaus umfasst die Hochstrom-Einspeiseklemme 18 einen Rastmechanismus 36, der an einer Rückseite 38 der Hochstrom-Einspeiseklemme 18 vorgesehen ist. Über den Rastmechanismus 36 lässt sich die Hochstrom-Einspeiseklemme 18 auf die Tragschiene 14 aufrasten, um die Hochstrom-Einspeiseklemme 18 mit der Tragschiene 14 mechanisch zu koppeln.

Die Vertiefung 28, über die der Spannungsabgriff 26 erreichbar ist, ist dagegen an einer Frontseite 40 der Hochstrom-Einspeiseklemme 18 vorgesehen, die zur Rückseite 38 entgegengesetzt ist.

Die Leitungsanschlüsse 22, 24 sowie die parallelen Kontaktierungsabschnitte 32, 34 sind dagegen an einer Seite 42, 44 der Hochstrom-Einspeiseklemme 18 vorgesehen, die senkrecht zur Rückseite 38 ist.

Im montierten Zustand der Hochstrom-Einspeiseklemme 18 sind zumindest die Frontseite 40 sowie die beiden Seiten 42, 44 zugänglich, sodass der jeweilige Spannungsabgriff 26 auch im montierten Zustand zugänglich ist.

Beispielsweise handelt es sich bei dem Spannungsabgriff 26 daher um einen Testabgriff, der über die Frontseite 40 zugänglich ist und über den typischerweise Tests bzw. Messungen durchgeführt werden können. Beispielsweise ist der Testabgriff über die Vertiefung 28 zugänglich, wie aus Figur 4 deutlich wird.

Sofern die Baugruppe 16 ausgebildet ist, ist das Überspannungsschutzgerät 20 mit der Hochstrom-Einspeiseklemme 18 über den Spannungsabgriff 26 elektrisch verbunden, wobei hierzu eine direkte elektrische Verbindung vorgesehen sein kann, wie nachfolgend noch erläutert wird.

Das Überspannungsschutzgerät 20 kann also mit der Hochstrom-Einspeiseklemme 18 sowohl elektrisch als auch mechanisch gekoppelt sein, insbesondere direkt gekoppelt sein.

Zur mechanischen Koppelung weist die Hochstrom-Einspeiseklemme 18 in der in Figur 4 gezeigten Ausgestaltung einen Hinterschnitt 46 auf, der im Bereich der Vertiefung 28 vorgesehen ist, um mit einem Federelement zusammenzuwirken. Das Federelement ist beispielsweise am Überspannungsschutzgerät 20 vorgesehen, sodass eine direkte mechanische Verbindung zwischen dem Überspannungsschutzgerät 20 und der Hochstrom-Einspeiseklemme 18 realisiert werden kann.

Anstatt der direkten mechanischen Verbindung des Überspannungsschutzgeräts 20 an der Hochstrom-Einspeiseklemme 18 kann auch vorgesehen sein, dass die Baugruppe 16 einen Adapter 48 umfasst. Ein derartiger Adapter 48 ist in Figur 5 beispielhaft gezeigt, der einen Grundkörper 49 umfasst, der plattenförmig ist.

Grundsätzlich kann das Überspannungsschutzgerät 20 über den Adapter 48 mit der Hochstrom-Einspeiseklemme 18 mechanisch und/oder elektrisch gekoppelt werden. Das Überspannungsschutzgerät 20 kann also mit dem Adapter 48 mechanisch und/oder elektrisch gekoppelt sein. Der Adapter 48 kann demnach mit der Hochstrom-Einspeiseklemme 18 mechanisch und/oder elektrisch gekoppelt sein. Der Adapter 48 kann also zur mechanischen und/oder elektrischen Verbindung zwischen dem Überspannungsschutzgerät 20 und der Hochstrom-Einspeiseklemme 18 dienen.

Insofern ist es möglich, dass der Adapter 48 genutzt wird, um die mechanische Verbindung zwischen dem Überspannungsschutzgerät 20 und der Hochstrom-Einspeiseklemme 18 zu realisieren, wohingegen die elektrische Verbindung zwischen dem Überspannungsschutzgerät 20 und der Hochstrom-Einspeiseklemme 18 direkt oder über eine elektrische Verbindung realisiert ist, bspw. einen elektrischen Leiter.

Der Adapter 48 kann aber auch genutzt werden, um die elektrische Verbindung zwischen dem Überspannungsschutzgerät 20 und der Hochstrom-Einspeiseklemme 18 zu realisieren, wohingegen die mechanische Verbindung zwischen dem Überspannungsschutzgerät 20 und der Hochstrom-Einspeiseklemme 18 direkt realisiert ist.

Es ist aber auch denkbar, dass der Adapter 48 genutzt wird, um die mechanische Verbindung sowie die elektrische Verbindung zwischen dem Überspannungsschutzgerät 20 und der Hochstrom-Einspeiseklemme 18 zu realisieren.

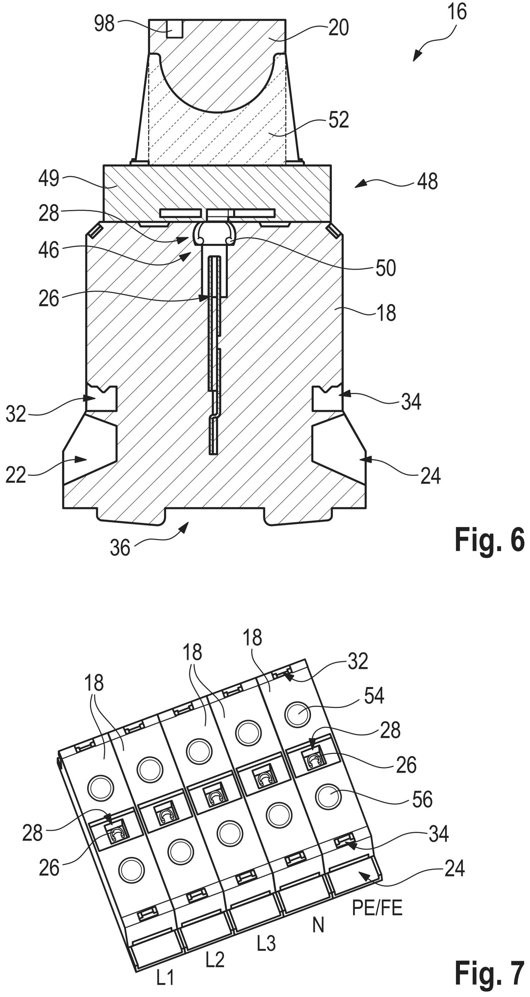

In der in Figur 5 gezeigten Ausführungsform umfasst der Adapter 48 ein Federelement 50, welches zur mechanischen Anbindung des Adapters 48 mit der Hochstrom-Einspeiseklemme 18 dient. Das Federelement 50 greift in die Vertiefung 28 der Hochstrom-Einspeiseklemme 18 ein, um mit dem dort vorgesehenen Hinterschnitt 46 zusammenzuwirken, wie dies in Figur 6 schematisch gezeigt ist.

Der Adapter 48 umfasst zudem einen Sockel 52, über den das in Figur 6 schematisch gezeigte Überspannungsschutzgerät 20 mit dem Adapter 48 mechanisch und elektrisch verbunden werden kann. Die Baugruppe 16, die die Hochstrom-Einspeiseklemme 18, das Überspannungsschutzgerät 20 sowie den Adapter 48 umfasst, ist in Figur 6 in einem zusammengebauten Zustand gezeigt.

Wie aus den Figuren 1 und 2 bereits hervorging, kann es sich bei der Hochstrom-Einspeiseklemme 18 um eine Reihenklemme handeln, die mit weiteren Hochstrom-Einspeiseklemmen 18 nebeneinander angeordnet werden kann, um eine Hochstrom-Einspeiseklemmengruppe zu bilden, was beispielhaft in Figur 7 gezeigt ist. Beispielsweise sind fünf Hochstrom-Einspeiseklemmen 18 nebeneinander angeordnet, um drei Phasen, L1, L2, L3, ein Neutralleiter-Potenzial N sowie ein Schutzleiterpotenzial PE zur Verfügung zu stellen. Anstatt des Schutzleiterpotenzials PE, auch als "Schutzerde" bezeichnet, kann auch eine funktionale Erde ("FE") vorgesehen sein. Die unterschiedlichen Hochstrom-Einspeiseklemmen 18 können farblich unterschiedlich gekennzeichnet sein, sodass diese aufgrund der Farbgebung voneinander unterscheidbar sind.

Aus Figur 7 wird auch deutlich, dass der über den Testabgriff bereitgestellte Spannungsabgriff 26, der in der Vertiefung 28 angeordnet ist, mittig zwischen zwei Öffnungen 54, 56 der jeweiligen Hochstrom-Einspeiseklemmen 18 vorgesehen ist. Über die Öffnungen 54, 56 kann ein Feststellelement, beispielsweise eine Schraube, betätigt werden, um die in dem Leitungsanschluss 22, 24 eingesetzte Leitung zu klemmen. Dieselben Feststellelemente können genutzt werden, um eine Komponente zu klemmen, die in dem entsprechenden parallelen Kontaktierungsabschnitt 32, 34 eingesetzt ist.

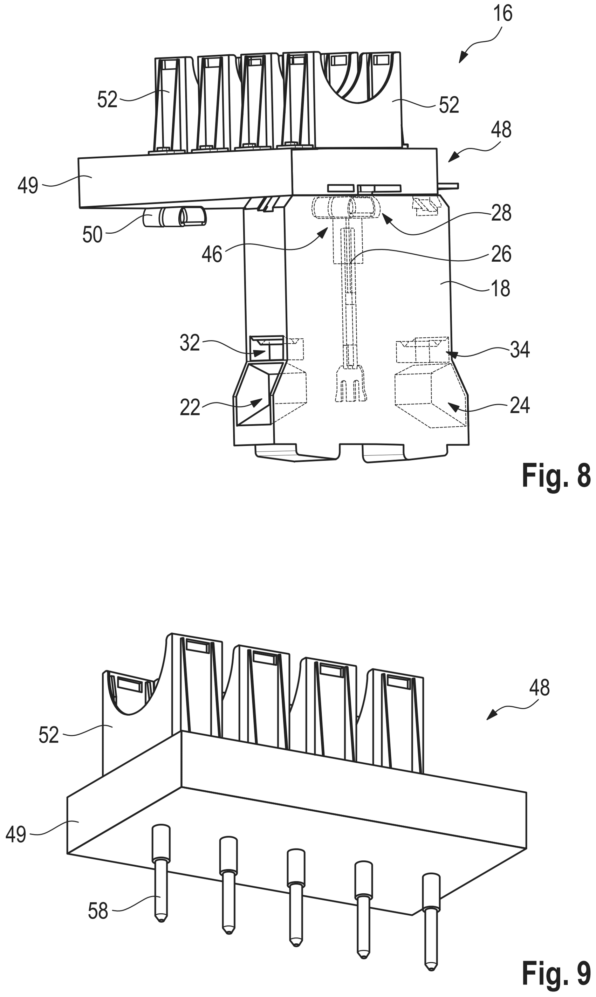

Der Adapter 48 kann grundsätzlich mehrere Sockel 52 aufweisen, um mehrere Überspannungsschutzgeräte 20 mechanisch und/oder elektrisch mit den Hochstrom-Einspeiseklemmen 18 zu koppeln, wie dies in den Figuren 8 bis 11 gezeigt ist, worauf nachfolgend Bezug genommen wird. Die Überspannungsschutzgeräte 20, die in die Sockel 52 eingesetzt werden, sind in den Figuren 8 bis 11 aus Gründen der besseren Übersichtlichkeit nicht gezeigt.

Die mechanische Anbindung des Adapters 48 erfolgt dabei über die bereits angesprochenen Federelemente 50, die insbesondere in Figur 8 gezeigt sind.

Die Federelemente 50 greifen in die Vertiefungen 28 der Hochstrom-Einspeiseklemmen 18 ein, um mit dem Hinterschnitt 46 einen Formschluss auszubilden. Wie aus Figur 8 deutlich wird, ist es ausreichend, wenn der Adapter 48 zwei Federelemente 50 aufweist, die an den jeweiligen Enden des Adapters 48 vorgesehen sind, um eine mechanische Anbindung mit der Hochstrom-Einspeiseklemmengruppe zu realisieren. Anders ausgedrückt ist eine mechanische Anbindung an alle Hochstrom-Einspeiseklemmen 18 der Hochstrom-Einspeiseklemmengruppe nicht notwendig.

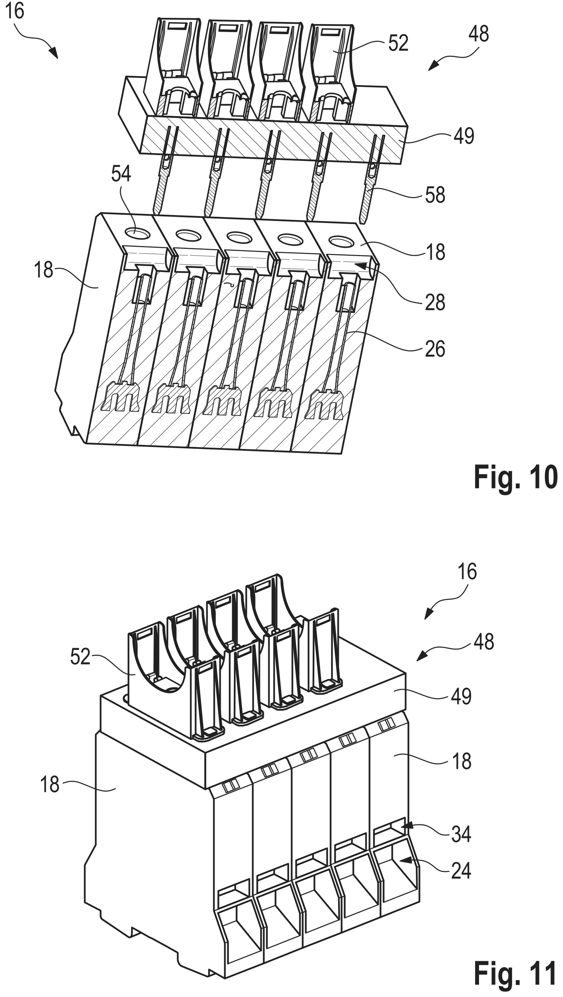

Die elektrische Anbindung des Adapters 48 an die Hochstrom-Einspeiseklemmen 18 kann über Steckkontakte 58 erfolgen, beispielsweise Bananenstecker, wie dies in den Figuren 9 und 10 insbesondere gezeigt ist. Die Steckkontakte 58 ragen in die Vertiefung 28 hinein, um den Spannungsabgriff 26 zu kontaktieren, sodass das am Spannungsabgriff 26 vorliegende Potenzial dem Überspannungsschutzgerät 20 zur Verfügung gestellt werden kann, welches in den Sockel 52 eingesetzt wird. Insbesondere aus Figur 10 ist erkennbar, dass über den Sockel 52 eine elektrische Verbindung zwischen den im Sockel 52 eingesetzten Überspannungsschutzgerät 20 und dem zugeordneten Steckkontakt 58 realisiert werden kann.

Auch wird aus Figur 10 deutlich, dass der Spannungsabgriff 26, die Leitungsanschlüsse 22, 24 sowie die in den parallelen Kontaktierungsabschnitten 32, 34 vorgesehenen Anschlüsse bzw. Parallelkontakte demselben Potenzial zugeordnet sind. Folglich kann der Spannungsabgriff 26 auch über die parallelen Kontaktierungsabschnitte 32, 34 bzw. die dort vorgesehenen Anschlüsse bzw. Parallelkontakte kontaktiert werden.

In Figur 11 ist die in Figur 10 teilweise getrennte Baugruppe 16 im zusammengebauten Zustand gezeigt, bei der sowohl die elektrische als auch die mechanische Anbindung über den Adapter 48 erfolgt, nämlich über die Federelemente 50, die in die Hinterschnitte 46 eingreifen, sowie die Steckkontakte 58, die die Spannungsabgriffe 26 kontaktieren.

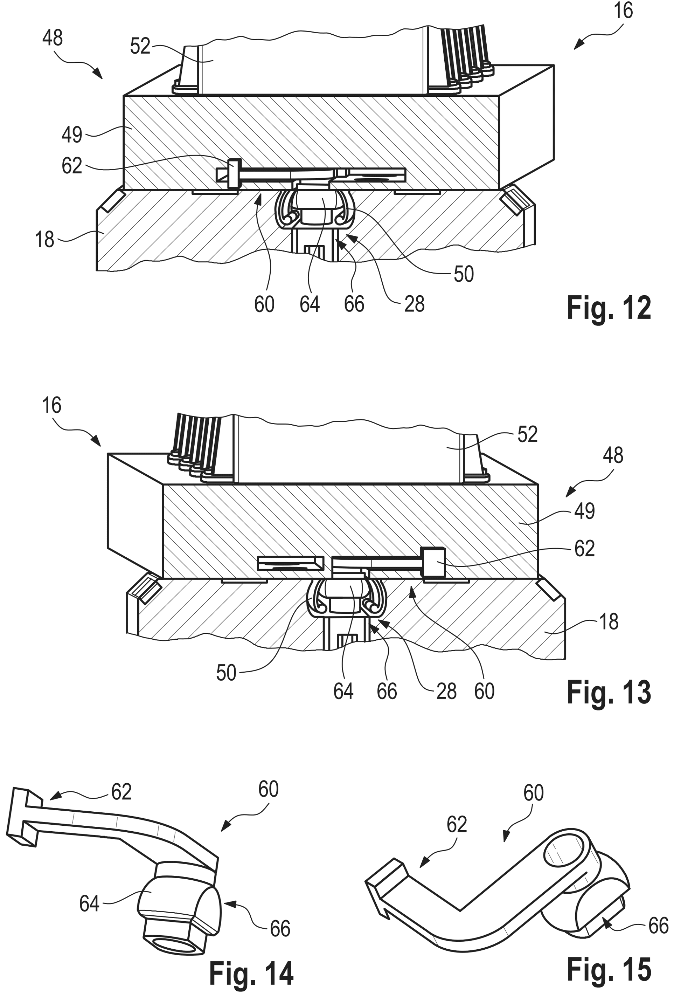

Aus den Figuren 12 bis 15 geht hervor, dass der Adapter 48 einen Verriegelungsmechanismus 60 aufweisen kann, über den die mechanische Verbindung des Überspannungsschutzgeräts 20 mit dem Adapter 48 und/oder der Hochstrom-Einspeiseklemme 18 gesichert werden kann.

Hierdurch ist das Überspannungsschutzgeräts 20 zusätzlich mechanisch gesichert, insbesondere vor einem versehentlichen Abziehen des Überspannungsschutzgeräts 20 sowie einem Abheben des Überspannungsschutzgeräts 20 während des Betriebs, bspw. aufgrund elektromagnetischer Kräfte, die im Fall eines Überspannungsereignisses auftreten.

Der Verriegelungsmechanismus 60 umfasst einen Verriegelungshebel 62, der zwischen einer Entriegelungsstellung (Figur 12) und einer Verriegelungsstellung (Figur 13) verstellt werden kann.

Wie aus den Figuren 14 und 15 hervorgeht, ist der Verriegelungshebel 62 mit einem Verriegelungselement 64 verbunden, insbesondere einstückig mit dem Verriegelungselement 64 ausgebildet. An dem Verriegelungselement 64 ist eine Verriegelungskontur 66 vorgesehen, die mit dem Federelement 50 zusammenwirken kann, um die mechanische Sicherung herzustellen, insbesondere mittels eins Formschlusses. Insofern stellt das Federelement 50 eine Gegenkontur für die Verriegelungskontur 66 bereit.

Grundsätzlich kann der Verriegelungsmechanismus 60 auch ein andersartig gestaltetes Verriegelungselement 64 aufweisen, an dem die Verriegelungskontur 66 vorgesehen ist, die mit dem Federelement 50 zusammenwirken kann, um die mechanische Sicherung herzustellen.

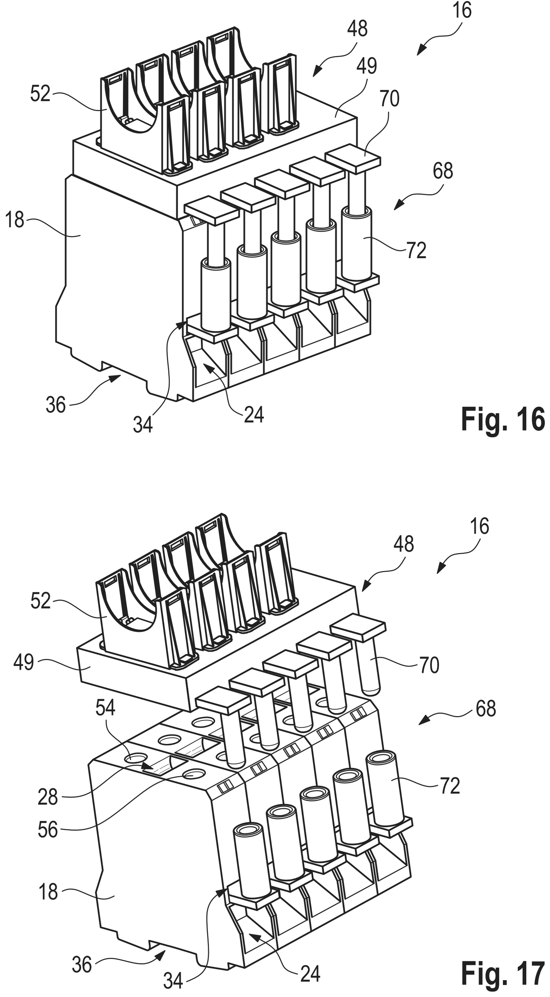

In den Figuren 16 und 17 ist eine weitere Ausführungsform der Baugruppe 16 gezeigt, bei der die elektrische Anbindung des Überspannungsschutzgeräts 20 mit der Hochstrom-Einspeiseklemme 18 über ein Kontaktsystem 68 erfolgt, das einen Kontaktstift 70 sowie eine Kontaktbuchse 72 umfasst, wie insbesondere aus Figur 17 deutlich wird. Insofern entsprich das Kontaktsystem 68 einer Steckverbindung.

Zudem ergibt sich die elektrische Anbindung in dieser Ausführungsform über die in den parallelen Kontaktierungsabschnitten 32, 34 vorgesehenen Anschlüsse, da vorliegend die Kontaktbuchse 72 in einem der parallelen Kontaktierungsabschnitte 32, 34 eingesetzt ist.

Beim Aufsetzen des Adapters 48 auf die Hochstrom-Einspeiseklemme 18, beispielsweise zur mechanischen Anbindung des Adapters 48 an die Hochstrom-Einspeiseklemme 18, wie zuvor erläutert, werden die Kontaktstifte 70 in die Kontaktbuchsen 72 eingesetzt, um die elektrische Verbindung herzustellen, was in Figur 16 gezeigt ist.

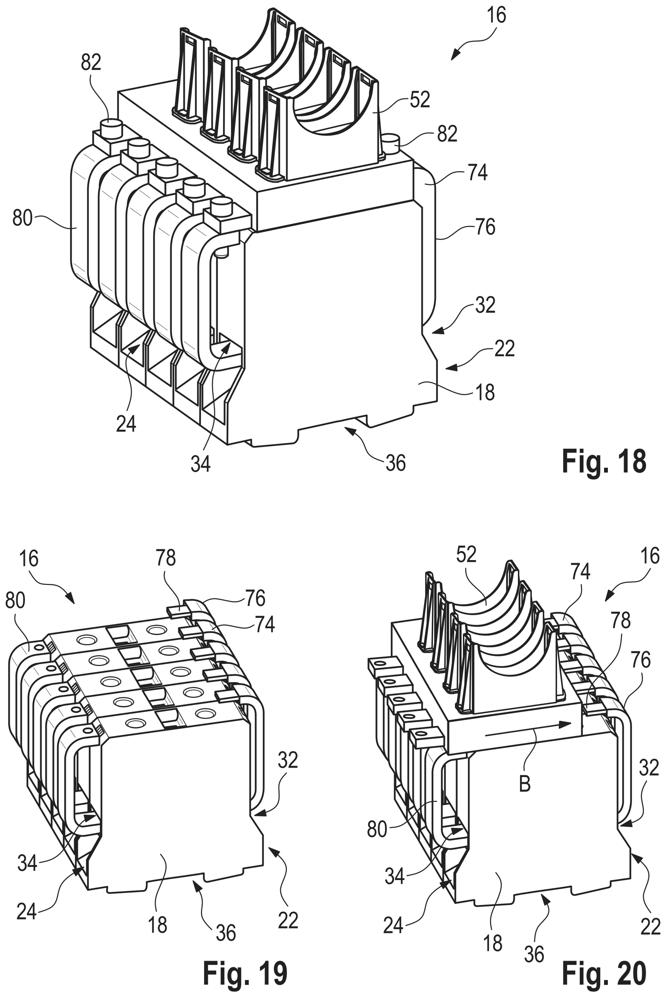

In den Figuren 18 bis 20 ist eine alternative Ausführungsform der Baugruppe 16 gezeigt, bei der die elektrische Anbindung über Anbindungsbügel 74 erfolgt, die eine Isolierung 76 aufweisen, welche äußerlich an einem elektrischen Leiter 78 vorgesehen ist.

Allgemein erfolgt die elektrische Anbindung also über den elektrischen Leiter 78, der mit der äußeren Isolierung 76 versehen ist.

In der in den Figuren 18 bis 20 gezeigten Ausführungsform ist der elektrische Leiter 78 bügelförmig ausgebildet, also als ein starres Bauteil.

Die Anbindungsbügel 74 sind dabei in den ersten parallelen Kontaktierungsabschnitten 32 angeordnet, wohingegen mechanische Befestigungsbügel 80 in den zweiten parallelen Kontaktierungsabschnitten 34 eingesetzt sind.

Die elektrische Anbindung des Überspannungsschutzgeräts 20 mit der Hochstrom-Einspeiseklemme 18 erfolgt derart, dass das Überspannungsschutzgerät 20 und/oder der Adapter 48 relativ zur Hochstrom-Einspeiseklemme 18 verschoben wird, nämlich entlang des Pfeils B, wie auch aus einem Vergleich der Figuren 18 und 20 deutlich wird.

Dabei werden die Leiter 78 der elektrischen Anbindungsbügel 74 in Kontaktöffnungen am Adapter 48 eingeschoben, um die elektrische Anbindung mit dem Adapter 48 zu realisieren.

Die mechanische Anbindung des Adapters 48 erfolgt über Befestigungsmittel 82, beispielsweise Schrauben oder Bolzen, die mit den Befestigungsbügeln 80 zusammenwirken, wie aus Figur 18 deutlich wird.

Zusätzlich kann vorgesehen sein, dass Befestigungsmittel 82, beispielsweise Schrauben oder Bolzen, auch an der Seite des Grundkörpers 49 des Adapters 48 angeordnet ist, an dem die Kontaktöffnungen zur elektrischen Anbindung vorgesehen sind. Die Befestigungsmittel 82 können zwischen den Leitern 78 in korrespondierende Öffnungen an den Hochstrom-Einspeiseklemme 18 eingesetzt werden.

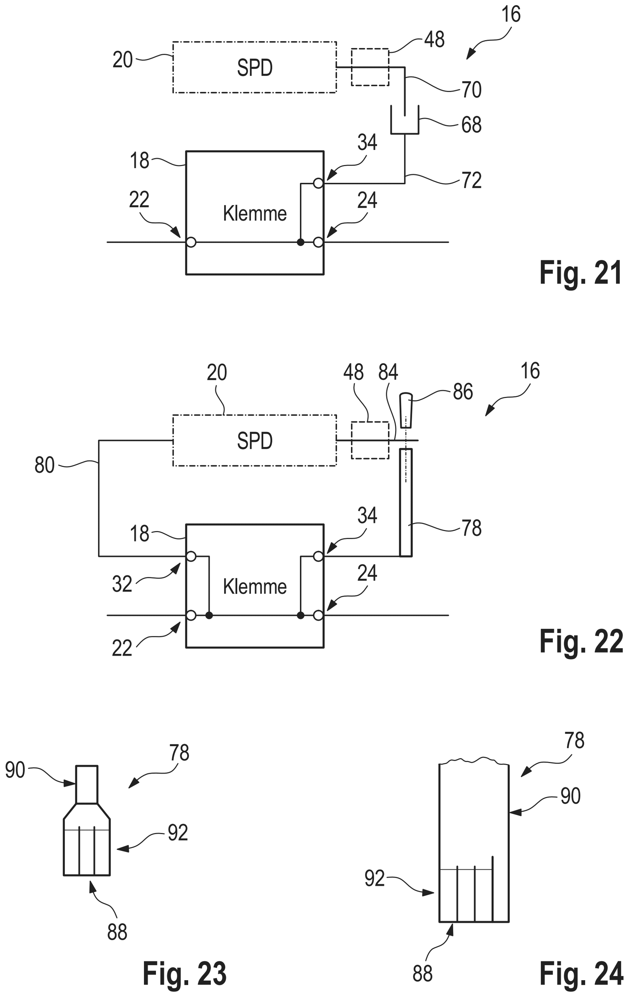

In Figur 21 ist die elektrische Anbindung des Überspannungsschutzgeräts 20 mit der Hochstrom-Einspeiseklemme 18 über ein Steck- bzw. Kontaktsystem 68 schematisch gezeigt.

Diese schematische Darstellung entspricht im Wesentlichen der Ausführungsform gemäß der Figuren 16 und 17, bei dem die Hochstrom-Einspeiseklemme 18 mit einer Kontaktbuchse 72 elektrisch gekoppelt ist, die in einen der parallelen Kontaktierungsabschnitte 32, 34 (vorliegend der zweite parallele Kontaktierungsabschnitt 34) eingesetzt ist.

Das Überspannungsschutzgerät 20 ist mit einem Kontaktstift 70 gekoppelt, der in die Kontaktbuchse 72 eingesteckt werden kann, um die elektrische Verbindung auszubilden.

In der in Figur 21 gezeigten Darstellung ist das Steck- bzw. Kontaktsystem 68 direkt zwischen dem Überspannungsschutzgerät 20 und der Hochstrom-Einspeiseklemme 18 ausgebildet, wohingegen in der in den Figuren 16 und 17 gezeigten Ausführungsform der Adapter 48 vorgesehen ist, mit dem die Kontaktstifte 70 gekoppelt sind. Dieser Unterschied ist in Figur 21 gestrichelt dargestellt.

In der Figur 22 ist die mechanische und/oder elektrische Anbindung des Überspannungsschutzgeräts 20 mit der Hochstrom-Einspeiseklemme 18 über die relative Verschiebbarkeit schematisch gezeigt.

Insofern zeigt die Figur 22 im Wesentlichen das Konzept der Baugruppe gemäß der Figuren 18 bis 20.

Die mechanische Verbindung zwischen dem Überspannungsschutzgerät 20 und der Hochstrom-Einspeiseklemme 18 erfolgt über den Befestigungsbügel 80, der in einen der parallelen Kontaktierungsabschnitte 32, 34 (vorliegend den ersten parallelen Kontaktierungsabschnitt 32) eingesetzt ist.

Die elektrische Verbindung zwischen dem Überspannungsschutzgerät 20 und der Hochstrom-Einspeiseklemme 18 erfolgt über den elektrischen Leiter 78, der in einen der parallelen Kontaktierungsabschnitte 32, 34 (vorliegend den zweiten parallelen Kontaktierungsabschnitt 34) eingesetzt ist.

Anstatt wie in der Baugruppe gemäß der Figuren 18 bis 20 ist der elektrische Leiter 78 nicht als ein Bügel ausgebildet, der in eine Kontaktöffnung eines Adapters 48 eingesetzt ist. Vielmehr ist vorliegend eine Kontaktierungslasche 84 vorgesehen, die über ein Befestigungselement 86 mit dem elektrischen Leiter 78 verbunden ist.

In der gezeigten Ausführungsform ist die Kontaktierungslasche 84 also direkt am Überspannungsschutzgerät 20 ausgebildet. Insofern ist zur elektrischen Verbindung kein Adapter 48 notwendig.

Alternativ kann aber auch hier ein Adapter 48 vorgesehen sein, an dem die Kontaktierungslasche 84 ausgebildet ist. Der optionale Adapter 48 ist gestrichelt dargestellt.

In den Figuren 23 und 24 sind zudem separat ausgewählte elektrische Leiter 78 gezeigt, wobei ein Ende der elektrischen Leiter 78 hinsichtlich der Breite anpassbar ist, da vorgeprägte Bereiche 88 vorgesehen sind, die (einzeln) abgetrennt werden können, um die Breite des elektrischen Leiters 78 an eine gewünschte Breite anzupassen.

Wie in Figur 23 gezeigt, kann der elektrische Leiter 78 einen Hauptabschnitt 90 mit rundem Querschnitt haben, wohingegen der Endabschnitt 92, an dem die vorgeprägten Bereiche 88 ausgebildet sind, als ein Flachleiter ausgebildet ist.

Der elektrische Leiter 78 gemäß Figur 24 ist durchgehend als ein Flachleiter ausgebildet, also sowohl der Hauptabschnitt 90 als auch der Endabschnitt 92, an dem die vorgeprägten Bereiche 88 ausgebildet sind.

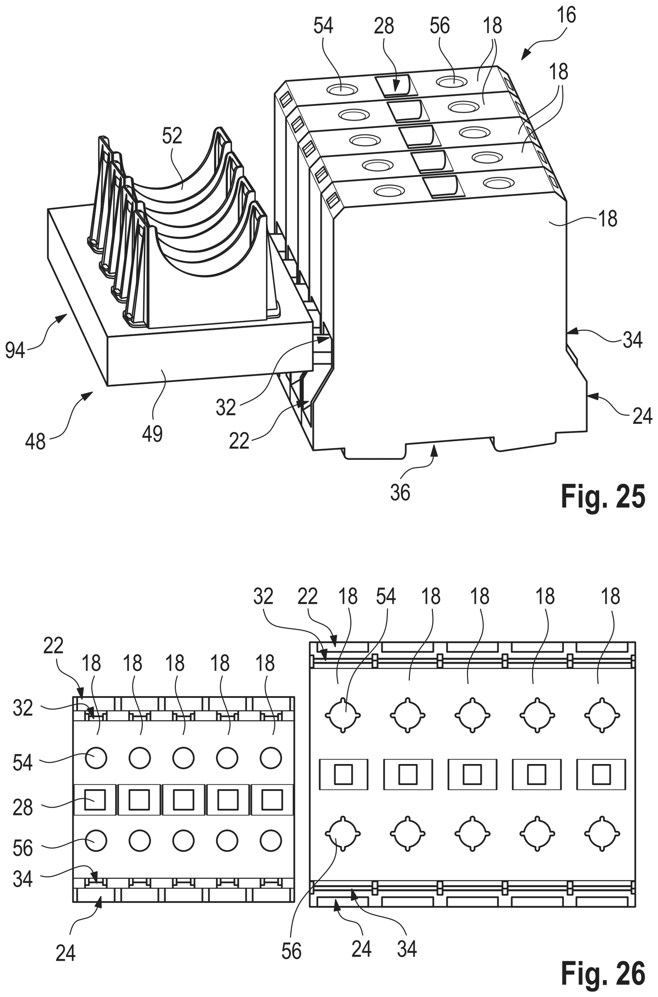

In Figur 25 ist eine alternative Ausführungsform der Baugruppe 16 gezeigt, bei der der Adapter 48 direkt in die ersten parallelen Kontaktierungsabschnitte 32 der Hochstrom-Einspeiseklemme 18 eingesetzt ist.

Insbesondere ist der Adapter 48 vorliegend als eine Montageplatte 94 ausgebildet, die an der Tragschiene 14 oder generell an einem Bauteil montiert werden kann, bspw. einer weiteren Tragschiene.

In Figur 26 ist schematisch gezeigt, dass die Hochstrom-Einspeiseklemme 18 unterschiedliche Größen aufweisen können.

Insofern kann es notwendig sein, dass die mechanische und/oder elektrische Anbindung des Überspannungsschutzgeräts 20, insbesondere über den Adapter 48, ebenfalls hinsichtlich der Position einer elektrischen Kontaktschnittstelle zur Kontaktierung des Spannungsabgriffs 26 sowie der Befestigungsschnittstelle zur Befestigung des Adapters 48 notwendig sein kann, sofern die Hochstrom-Einspeiseklemmen 18 unterschiedlicher Größe mit demselben Adapter 48 bzw. demselben Überspannungsschutzgerät 20 verwendet können werden soll.

Die elektrische Kontaktschnittstelle kann durch den Steckkontakt 58, wie beispielhaft in Figur 9 dargestellt, ausgebildet sein.

Die Befestigungsschnittstelle kann durch das Federelement 50, wie beispielhaft in Figur 5 dargestellt, ausgebildet sein.

Die positionsveränderbare Kontaktschnittstelle und/oder die positionsveränderbare Befestigungsschnittstelle sind bzw. ist insbesondere beim Adapter 48 von Bedeutung, da dieser gleichzeitig mit mehreren Hochstrom-Einspeiseklemmen 18 zusammenwirkt.

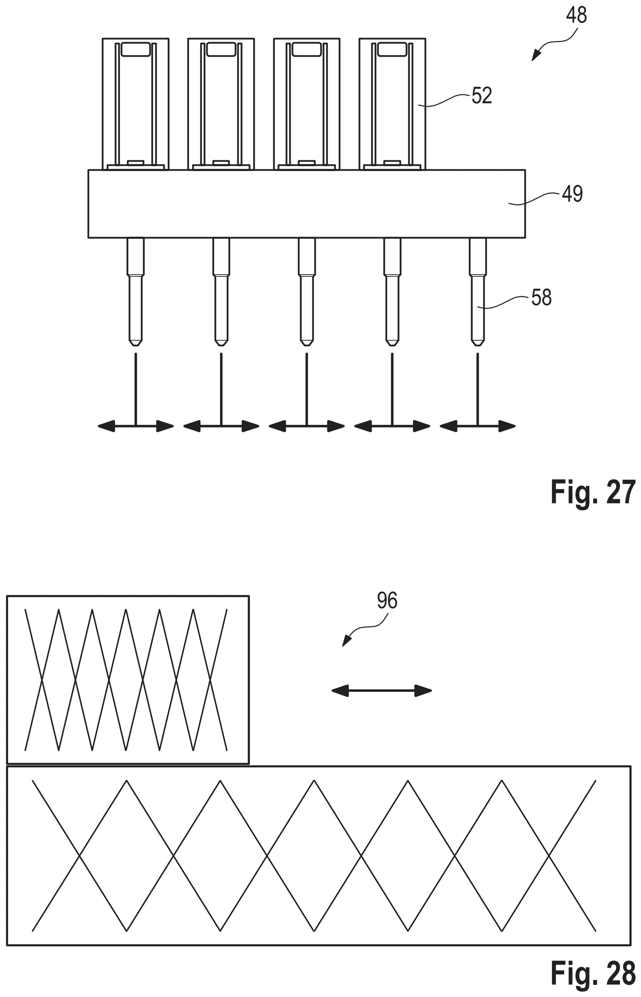

Um zu gewährleisten, dass die Kontaktschnittstelle und/oder die Befestigungsschnittstelle positionsveränderbar ist, kann die entsprechende Schnittstellen beispielsweise verschiebbar in Bezug auf den Adapter 48 sein, wie es in Figur 27 beispielhaft für den Steckkontakt 58 angedeutet ist.

In einfacher Weise lässt sich dies dadurch realisieren, dass der Steckkontakt 58 über eine elektrische Scherenmechanik 96 hinsichtlich der Position veränderbar ist, wie es in Figur 28 schematisch gezeigt ist. Der Steckkontakt 58 ist also mit der elektrischen Scherenmechanik 96 verbunden, wodurch die Position des Steckkontakts 58 veränderbar ist.

Hierdurch ist insbesondere sichergestellt, dass sich eine Verschaltung mehrerer, am Adapter 48 angeordneter Überspannungsschutzgeräte 20 untereinander nicht verändern würde.

Da der Testabgriff bei der elektrischen Verbindung des Überspannungsschutzgeräts 20 an die Hochstrom-Einspeiseklemme 18 belegt sein kann, kann die Baugruppe 16 einen Prüfabgriff 98 aufweisen, der beispielsweise am Überspannungsschutzgerät 20 ausgebildet ist, wie dies in Figur 6 schematisch gezeigt ist. Hierüber können die Messungen und Tests durchgeführt werden, die sonst über den Testabgriff der Hochstrom-Einspeiseklemme 18 durchgeführt werden.

Alternativ kann der Prüfabgriff 98 an der elektrisch leitenden Verbindung zwischen dem Überspannungsschutzgerät 20 und der Hochstrom-Einspeiseklemme 18 vorgesehen sein, bspw. am Adapter 48.

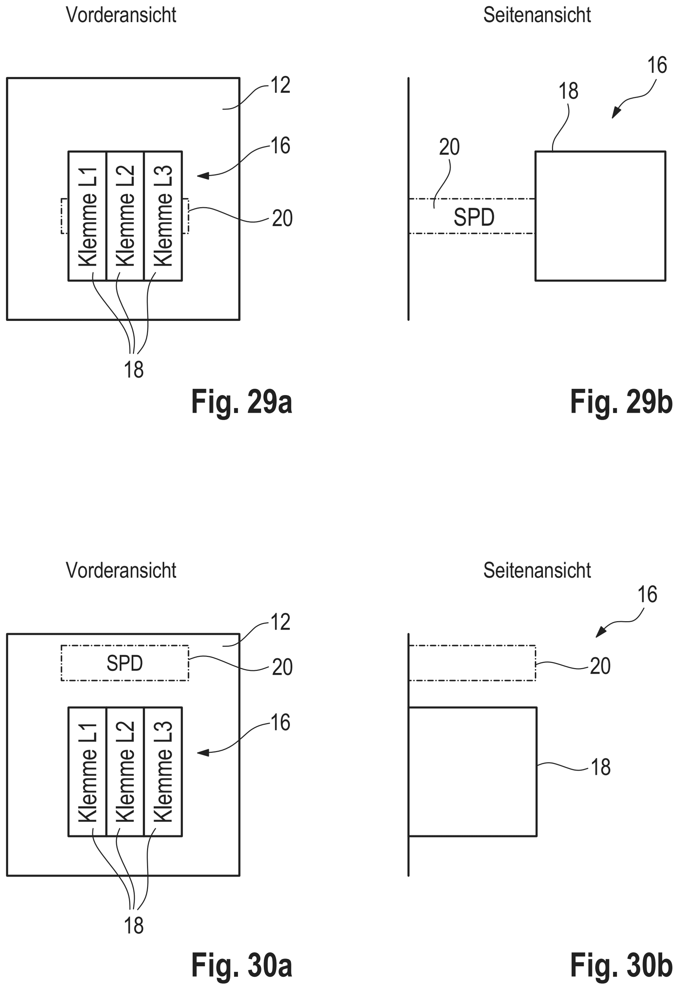

In den Figuren 29 bis 33 sind weitere Ausgestaltungen einer Baugruppe 16 gezeigt, bei der die Position des Überspannungsschutzgeräts 20 in Bezug auf die Hochstrom-Einspeiseklemmen 18 unterschiedlich ist.

Beispielsweise ist das Überspannungsschutzgerät 20 unterhalb der Hochstrom-Einspeiseklemmen 18 angeordnet, wie dies in den Figuren 29a und Figur 29b gezeigt ist.

Das Überspannungsschutzgerät 20 kann auch neben der Hochstrom-Einspeiseklemmen 18 angeordnet sein, insbesondere in Frontalansicht auf die Baugruppe 16 oberhalb der Hochstrom-Einspeiseklemmen 18, wie dies in den Figuren 30a und Figur 30b gezeigt ist.

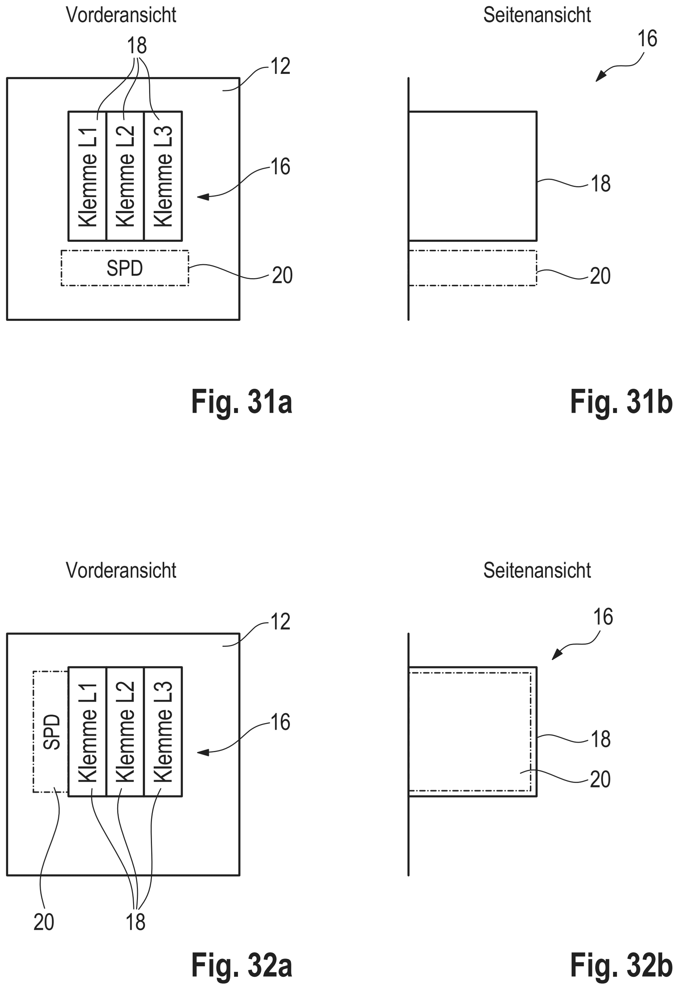

Ferner kann das Überspannungsschutzgerät 20 neben der Hochstrom-Einspeiseklemmen 18 angeordnet sein, insbesondere in Frontalansicht auf die Baugruppe 16 unterhalb der Hochstrom-Einspeiseklemmen 18, wie dies in den Figuren 31a und Figur 31b gezeigt ist.

Auch kann das Überspannungsschutzgerät 20 neben der Hochstrom-Einspeiseklemmen 18 angeordnet sein, insbesondere in Frontalansicht auf die Baugruppe 16 seitlich links von der Hochstrom-Einspeiseklemmen 18, wie dies in den Figuren 32a und Figur 32b gezeigt ist.

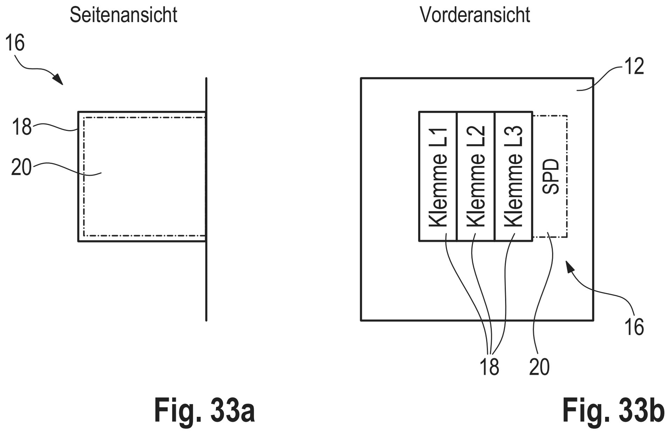

Ebenso kann das Überspannungsschutzgerät 20 neben der Hochstrom-Einspeiseklemmen 18 angeordnet sein, insbesondere in Frontalansicht auf die Baugruppe 16 seitlich rechts von der Hochstrom-Einspeiseklemmen 18, wie dies in den Figuren 33a und Figur 33b gezeigt ist.

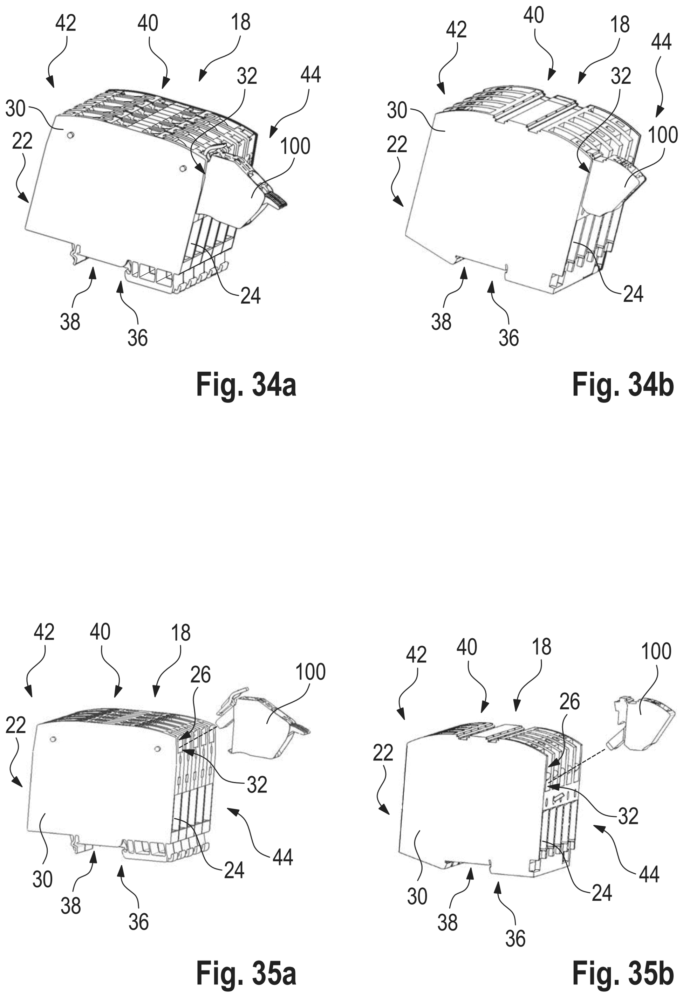

In den Figuren 34a und Figur 34b ist jeweils eine perspektivische Darstellung einer Hochstrom-Einspeiseklemme 18, bei der ein zur Hochstrom-Einspeiseklemme 18 separat ausgebildeter Einsatz 100 vorgesehen ist, um den Spannungsabgriff 26 zu kontaktieren.

In den Figuren 35a und 35b sind die jeweiligen Hochstrom-Einspeiseklemmen 18 in einer Explosionsdarstellung gezeigt, bei der der zur Hochstrom-Einspeiseklemme 18 separat ausgebildete Einsatz 100 nicht im eingesetzten Zustand gezeigt ist.

Aus den Figuren 34a bis 35b geht hervor, dass bei den Hochstrom-Einspeiseklemmen 18 der Spannungsabgriff 26 an einer der Seiten 42, 44 des Außengehäuses 30 angeordnet ist, an der auch die Leitungsanschlüsse 22, 24 vorgesehen sind. Die entsprechende Seite 42, 44 steht senkrecht zur Rückseite 38 der Hochstrom-Einspeiseklemmen 18. Insofern werden die Parallelkontakte der Hochstrom-Einspeiseklemmen 18 genutzt, um den Spannungsabgriff 26 zu kontaktieren.

Die Einsätze 100 können, wie in den Figuren gezeigt, an unterschiedlicher Stelle eingesetzt werden, was letztendlich davon abhängt, wo der Spannungsabgriff 26 konkret zugänglich ist, insbesondere über die parallelen Kontaktierungsabschnitte 32.

Mit dem jeweiligen Einsatz 100 ist es möglich, dass eine Kontaktierung des Testabgriffs über die Frontseite 40 der Hochstrom-Einspeiseklemme 18 weiterhin möglich ist.

Aus den Figuren 34a bis 35b wird insbesondere deutlich, dass der Einsatz 100 anders ausgebildet und unterschiedlich mechanisch mit der jeweiligen Hochstrom-Einspeiseklemme 18 befestigt ist. Dies hängt letztendlich von der Ausgestaltung der Hochstrom-Einspeiseklemme 18 ab.

Darüber hinaus hat die Hochstrom-Einspeiseklemme 18 gemäß der Ausgestaltung nach den Figuren 34a und 35a einen Rastmechanismus 36 an der Rückseite 38, insbesondere einen anders ausgebildeten als die Hochstrom-Einspeiseklemme 18 gemäß der Ausgestaltung nach den Figuren 34b und 35b.

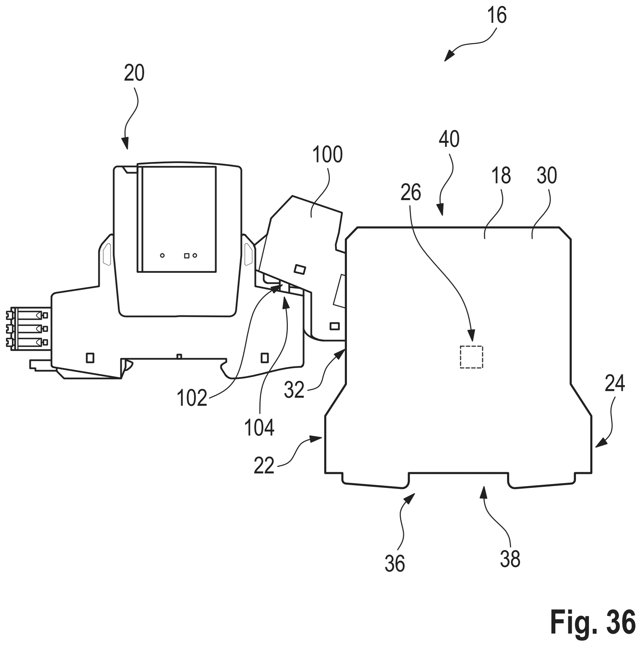

Die Hochstrom-Einspeiseklemme 18 gemäß der Ausgestaltung nach den Figuren 34a, 35a und ein Einsatz 100 sind in Figur 36 im montierten Zustand bei der Baugruppe 16 gezeigt.

Hieraus wird zunächst deutlich, dass die Einsätze 100 und die Hochstrom-Einspeiseklemmen 18 auch untereinander austauschbar sein können, da ein anderer Einsatz 100 als in den Figuren 34a bis 35b verwendet wird.

Der Spannungsabgriff 26 der Hochstrom-Einspeiseklemme 18, der im Außengehäuse 30 aufgenommen ist, wird mittels des Einsatzes 100 kontaktiert, indem der Einsatz 100 in den parallelen Kontaktierungsabschnitt 32 eingesetzt worden ist.

Der Einsatz 100 weist einen Steckkontakt 102 auf, der in eine Einsteckklemme 104, auch als Push-In-Klemme bezeichnet, des Überspannungsschutzgeräts 20 einsteckbar ist, um die elektrische Verbindung herzustellen.

Die Frontseite 40 der Hochstrom-Einspeiseklemme 18 ist weiterhin zugänglich, sodass der Testabgriff, über den der Spannungsabgriff ebenfalls kontaktierbar ist, für Test- bzw. Messzwecke genutzt werden kann, obwohl das Überspannungsschutzgerät 20 mit der Hochstrom-Einspeiseklemme 18 elektrisch verbunden ist.

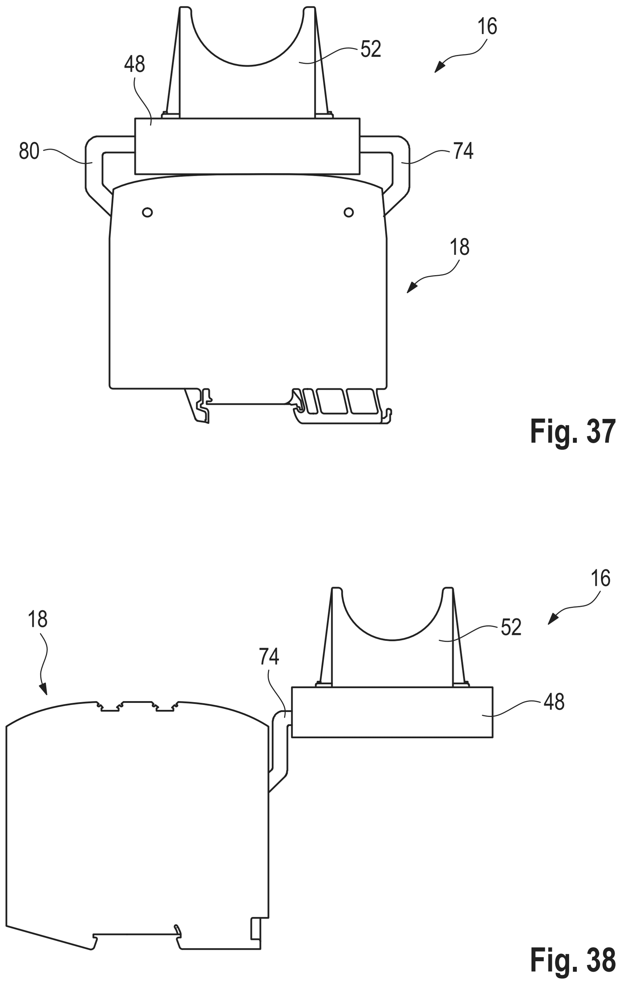

In Figur 37 ist eine Baugruppe 16 gezeigt, bei der die Hochstrom-Einspeiseklemme 18 gemäß der Ausgestaltung nach den Figuren 34a und 35a ausgebildet ist.

Die elektrische Anbindung erfolgt dabei, wie zuvor schon beschrieben, über einen elektrischen Anbindungsbügel 74, der in Kontaktöffnungen am Adapter 48 eingeschoben ist, um die elektrische Anbindung mit dem Adapter 48 zu realisieren.

Die mechanische Anbindung des Adapters 48 erfolgt dabei, wie zuvor schon beschrieben, über den Befestigungsbügel 80.

Letztendlich unterscheidet ich die in der Figur 37 gezeigte Ausführungsform von der in den Figuren 18 bis 20 gezeigten Ausführungsform in der Ausgestaltung der Hochstrom-Einspeiseklemme 18, insbesondere der Position der Kontaktierungsabschnitte 32, 34, über die der elektrischen Anbindungsbügel 74 und der Befestigungsbügel 80 den Adapter 48 mechanisch und elektrisch mit der Hochstrom-Einspeiseklemme 18 verbinden.

Der elektrische Anbindungsbügel 74 und der Befestigungsbügel 80 sind insofern auch anders gestaltet als in den zuvor gezeigten Ausführungsbeispielen, insbesondere derjenigen der Figuren 18 bis 20.

In Figur 38 ist eine Baugruppe 16 gezeigt, bei der die Hochstrom-Einspeiseklemme 18 gemäß der Ausgestaltung nach den Figuren 34b und 35b ausgebildet ist. Die Baugruppe 16 der Figur 38 entspricht im Wesentlichen derjenigen der Figur 25, wobei aufgrund der anderen Ausgestaltung der Hochstrom-Einspeiseklemme 18 eine andere Anbindung des Adapters 48 vorliegt, insbesondere eine andere elektrische Anbindung mittels des elektrischen Anbindungsbügels 74, der sich von der Ausgestaltung auch von demjenigen der Figur 25 unterscheidet.

## Patentansprüche

1. Baugruppe (16) für elektrische Anlagen, mit wenigstens einer auf einer Tragschiene (14) montierbaren Hochstrom-Einspeiseklemme (18) und wenigstens einem Überspannungsschutzgerät (20), wobei die Hochstrom-Einspeiseklemme (18) einen ersten Leitungsanschluss (22) zur klemmenden Anbindung einer ersten Leitung, einen zweiten Leitungsanschluss (24) zur klemmenden Anbindung einer zweiten Leitung und einen zusätzlichen Spannungsabgriff (26) aufweist, und wobei das Überspannungsschutzgerät (20) mit dem Spannungsabgriff (26) der Hochstrom-Einspeiseklemme (18) elektrisch verbunden ist.

2. Baugruppe (16) nach Anspruch 1, **dadurch gekennzeichnet, dass** der Spannungsabgriff (26) ein in der Hochstrom-Einspeiseklemme (18) integrierter Testabgriff ist, über den das Überspannungsschutzgerät (20) mit der Hochstrom-Einspeiseklemme (18) elektrisch leitend verbunden ist, insbesondere wobei der Testabgriff mittig zwischen zwei Öffnungen (54, 56) in einem Außengehäuse (30) der Hochstrom-Einspeiseklemme (18) vorgesehen ist, wobei Feststellelemente über die Öffnungen (54, 56) zur klemmenden Anbindung der ersten Leitung und der zweiten Leitung betätigbar sind.

3. Baugruppe (16) nach Anspruch 1 oder 2, **dadurch gekennzeichnet, dass** die Hochstrom-Einspeiseklemme (18) einen Rastmechanismus (36) an einer Rückseite (38) der Hochstrom-Einspeiseklemme (18) aufweist, über den die Hochstrom-Einspeiseklemme (18) auf der Tragschiene (14) aufrastbar ist, insbesondere wobei die Rückseite (38) entgegengesetzt zu einer Frontseite (40) der Hochstrom-Einspeiseklemme (18) ist, an der der Spannungsabgriff (26) vorgesehen ist, oder wobei der Spannungsabgriff (26) einer Seite (40, 42) der Hochstrom-Einspeiseklemme (18) zugeordnet ist, die senkrecht zur Rückseite (38) ist, beispielsweise der Seite (40, 42), an der der erste Leitungsanschluss (22) oder der zweite Leitungsanschluss (24) ist.

4. Baugruppe (16) nach einem der vorhergehenden Ansprüche, **dadurch gekennzeichnet, dass** das Überspannungsschutzgerät (20) direkt an der Hochstrom-Einspeiseklemme (18) mechanisch befestigt ist, insbesondere wobei an der Hochstrom-Einspeiseklemme (18) ein Hinterschnitt (46) vorgesehen ist, in den ein am Überspannungsschutzgerät (20) vorgesehenes Federelement einrastet.

5. Baugruppe (16) nach einem der vorhergehenden Ansprüche, **dadurch gekennzeichnet, dass** das Überspannungsschutzgerät (20) direkt mit dem Spannungsabgriff (26) der Hochstrom-Einspeiseklemme (18) elektrisch verbunden ist, insbesondere wobei eine Steckverbindung vorgesehen ist.

6. Baugruppe (16) nach einem der Ansprüche 1 bis 4, **dadurch gekennzeichnet, dass** ein elektrischer Leiter (78) zwischen der Hochstrom-Einspeiseklemme (18) und dem Überspannungsschutzgerät (20) vorgesehen ist, der separat zur Hochstrom-Einspeiseklemme (18) und zum Überspannungsschutzgerät (20) ausgebildet ist, insbesondere wobei eine Breite des elektrischen Leiters (78) anpassbar ist, beispielsweise durch vorgeprägte Bereiche (88) an zumindest einem Ende des elektrischen Leiters (78).

7. Baugruppe (16) nach einem der vorhergehenden Ansprüche, **dadurch gekennzeichnet, dass** die Baugruppe (16) einen Adapter (78) umfasst, der zur elektrischen und/oder mechanischen Verbindung des Überspannungsschutzgeräts (20) mit der Hochstrom-Einspeiseklemme (18) vorgesehen ist, insbesondere wobei der Adapter (78) als eine Montageplatte (94) ausgebildet ist.

8. Baugruppe (16) nach Anspruch 7, **dadurch gekennzeichnet, dass** die Hochstrom-Einspeiseklemme (18) eine Vertiefung (28) aufweist, über die der Adapter (48) mit der Hochstrom-Einspeiseklemme (18) mechanisch lösbar gekoppelt ist, wobei ein Hinterschnitt (46) im Bereich der Vertiefung (28) vorgesehen ist, in den ein am Adapter (48) vorgesehenes Federelement (50) einrastet.

9. Baugruppe (16) nach Anspruch 7 oder 8, **dadurch gekennzeichnet, dass** der Adapter (48) wenigstens einen Sockel (52) für das Überspannungsschutzgerät (20) aufweist, in den das Überspannungsschutzgerät (20) einsetzbar ist, und/oder dass der Adapter (48) einen Verriegelungsmechanismus (60) aufweist, über den die mechanische Verbindung des Überspannungsschutzgeräts (20) mit dem Adapter (48) und/oder Hochstrom-Einspeiseklemme (18) in einer Verriegelungsstellung verriegelt werden kann, sodass das Überspannungsschutzgerät (20) zusätzlich mechanisch gesichert ist, insbesondere wobei der Verriegelungsmechanismus (60) ein Verriegelungselement (64) aufweist, an dem eine Verriegelungskontur (66) vorgesehen ist.

10. Baugruppe (16) nach einem der vorhergehenden Ansprüche, **dadurch gekennzeichnet, dass** das Überspannungsschutzgerät (20) relativ zur Hochstrom-Einspeiseklemme (18) verschiebbar ist, um eine Endstellung zu erreichen, wobei das Überspannungsschutzgerät (20) nur in der Endstellung mit der Hochstrom-Einspeiseklemme (18) elektrisch verbunden ist, insbesondere wobei das Überspannungsschutzgerät (20) zusammen mit dem Adapter (48) relativ zur Hochstrom-Einspeiseklemme (18) verschiebbar ist, und/oder dass die Hochstrom-Einspeiseklemme (18) zumindest einen ersten parallelen Kontaktierungsabschnitt (32) aufweist, in dem der Spannungsabgriff (26) vorgesehen ist, insbesondere wobei die Hochstrom-Einspeiseklemme (18) einen zweiten parallelen Kontaktierungsabschnitt (34) aufweist, über den das Überspannungsschutzgerät (20) an der Hochstrom-Einspeiseklemme (18) mechanisch befestigt ist.

11. Baugruppe (16) nach einem der vorhergehenden Ansprüche, **dadurch gekennzeichnet, dass** ein Kontaktsystem (68) vorhanden ist, das wenigstens einen Kontaktstift (70) und eine Kontaktbuchse (72) aufweist, in die der Kontaktstift (70) eingesteckt ist, um die elektrische Verbindung zwischen dem Überspannungsschutzgerät (20) und dem Spannungsabgriff (26) der Hochstrom-Einspeiseklemme (18) auszubilden, insbesondere wobei die Kontaktbuchse (72) oder der Kontaktstift (70) mit dem ersten parallelen Kontaktierungsabschnitt (32) verbunden ist.

12. Baugruppe (16) nach einem der vorhergehenden Ansprüche, **dadurch gekennzeichnet, dass** die Baugruppe (16) einen Prüfabgriff (98) aufweist, der am Überspannungsschutzgerät (20) und/oder an einer elektrisch leitenden Verbindung zwischen dem Überspannungsschutzgerät (20) und der Hochstrom-Einspeiseklemme (18) vorgesehen ist.

13. Schaltschrank (10) mit einem Einspeisebereich (12) und einer Baugruppe (16) nach einem der vorhergehenden Ansprüche, wobei die Baugruppe (16) im Einspeisebereich (12) angeordnet ist, der eine Tragschiene (14) aufweist, insbesondere wobei das Überspannungsschutzgerät (20), in Frontalansicht auf den Einspeisebereich (12), zwischen der Tragschiene (14) und der Hochstrom-Einspeiseklemme (18) angeordnet ist oder dass die Hochstrom-Einspeiseklemme (18), in Frontalansicht auf den Einspeisebereich (12), zwischen der Tragschiene (14) und dem Überspannungsschutzgerät (20) angeordnet ist.

14. Überspannungsschutzgerät (20) für eine Baugruppe (16) nach einem der Ansprüche 1 bis 12, wobei das Überspannungsschutzgerät (20) wenigstens eine elektrische Kontaktschnittstelle (58) zur Kontaktierung des zusätzlichen Spannungsabgriffs (26) der Hochstrom-Einspeiseklemme (18) sowie wenigstens eine Befestigungsschnittstelle (50) zur Befestigung des Überspannungsschutzgeräts (20) umfasst, und wobei die elektrische Kontaktschnittstelle (58) und/oder die Befestigungsschnittstelle (50) positionsveränderbar sind bzw. ist, sodass das Überspannungsschutzgerät (20) mit unterschiedlichen Hochstrom-Einspeiseklemmen (18) elektrisch und/oder mechanisch verbindbar ist.

15. Adapter (48) zur elektrischen Anbindung und mechanischen Befestigung eines Überspannungsschutzgeräts (20) an einer Hochstrom-Einspeiseklemme (18), wobei der Adapter (48) wenigstens eine elektrische Kontaktschnittstelle (58) zur Kontaktierung eines zusätzlichen Spannungsabgriffs (26) der Hochstrom-Einspeiseklemme (18) sowie wenigstens eine Befestigungsschnittstelle (50) zur Befestigung an der Hochstrom-Einspeiseklemme (18) umfasst, und wobei die elektrische Kontaktschnittstelle (58) und/oder die Befestigungsschnittstelle (50) positionsveränderbar sind bzw. ist, sodass das Überspannungsschutzgerät (20) über den Adapter (48) mit unterschiedlichen Hochstrom-Einspeiseklemmen (18) elektrisch und/oder mechanisch verbindbar ist.
